# EUROPÄISCHE PATENTSCHRIFT

(11) **EP 3 111 126 B1**
(45) Veröffentlichungstag und Bekanntmachung des Hinweises auf die Patenterteilung: **12.06.2019**
(21) Anmeldenummer: 15707097.0
(22) Anmeldetag: 25.02.2015
(51) Int. Cl.: F16L 37/12, F16L 37/14, F16L 37/088

(54) **STECKVERBINDUNG FÜR FLUID-LEITUNGEN**
PLUG-IN CONNECTION FOR FLUID LINES
CONNECTEUR ENFICHABLE POUR CONDUITS DE FLUIDE

(30) Priorität: 28.02.2014 DE 102014102662
(43) Veröffentlichungstag der Anmeldung: 04.01.2017
(73) Patentinhaber: Voss Automotive GmbH, 51688 Wipperfürth (DE)
(72) Erfinder: PLIETSCH, Reinhard, 42929 Wermelskirchen (DE); HESS, Jochem-Andreas, 51688 Wipperfürth (DE); ZENSES, Frank, 50354 Hürth (DE); SIEPER, Günter, 42853 Remscheid (DE)
(74) Vertreter: Patent- und Rechtsanwälte Dr. Solf & Zapf
(86) Internationale Anmeldenummer: PCT/EP2015/053896
(87) Internationale Veröffentlichungsnummer: WO 2015/128355

(56) Entgegenhaltungen:
- EP-A1- 1 806 528
- WO-A1-2013/135433
- DE-A1-102005 038 439
- DE-A1-102012 104 288
- DE-C1- 4 217 646
- DE-U1- 20 001 019
- DE-U1-202004 012 795
- FR-A1- 2 223 614
- US-A1- 2008 258 462

## Beschreibung

Die vorliegende Erfindung betrifft eine Steckverbindung für Fluid-Leitungen, umfassend zwei zusammensteckbare Kupplungsteile, die im eingesteckten Zustand über eine Verriegelungseinrichtung lösbar arretierbar ist, die einerseits aus zwei äußeren, radial abstehenden und im eingesteckten Zustand axial in Steckrichtung benachbarten Haltestegen der beiden Kupplungsteile und andererseits aus einem Halteteil besteht, welches in einem Vormontagezustand an einem der beiden Kupplungsteile axial und radial fixiert montierbar ist und im Montagezustand mit mindestens einem im Axialschnitt insbesondere C-förmigen, zwei Bünde aufweisenden, radial elastisch beweglichen Halteabschnitt die Haltestege der beiden Kupplungsteile axial und radial umgreift,

Eine Steckverbindung der vorstehend beschriebenen Art ist aus der WO 2006/018384 A1 bekannt, in der von einem bekannten Verriegelungsprinzip ausgegangen wird, wonach ein C-förmiger Halteabschnitt eines Halteteiles Haltestege von Kupplungsteilen formschlüssig umgreift und damit arretiert. Um die Verlustgefahr des Halteteiles zu reduzieren und eine Montage, besonders auch in Anwendungsfällen, bei denen am Montageort nur ein kleiner Umgebungsraum zur Verfügung steht, oder bei denen in den Kupplungsteilen mindestens ein Ventil integriert sein soll, zu vereinfachen, ist dabei vorgesehen, dass das Halteteil derart ausgebildet und an dem einen der beiden Kupplungsteile derart unverlierbar vormontiert bzw. vormontierbar ist, dass es einerseits axial spielarm und radial verliersicher fixiert und andererseits im Bereich des Halteabschnittes radial elastisch beweglich ist. Dabei sind das Halteteil im Bereich des Halteabschnittes sowie der Haltesteg des anderen Kupplungsteils in Anpassung aneinander zur Bildung einer in Steckrichtung wirkenden, formschlüssigen Rastverbindung derart ausgebildet, dass beim Zusammenstecken der Kupplungsteile der Halteabschnitt durch den sich dazu relativ bewegenden Haltesteg radial nach außen bewegt wird und nachfolgend im eingesteckten Zustand durch radiale Zurückbewegung nach innen die Haltestege der beiden Kupplungsteile zur Verriegelung umgreift. Bevorzugt ist das Halteteil als einteiliges Ringteil ausgebildet, das an einer Umfangsstelle eine axial und radial durchgehende Schlitzunterbrechung aufweist. Diese bekannte Steckverbindung ermöglicht eine einfache, schnelle und komfortable sowie auch sehr sichere Einhand-Montage. Um, wenn das Halteteil von den Kupplungsteilen gelöst ist, die Verlustgefahr zu reduzieren, sieht die WO 2006/018384 A1 vor, das Halteteil über ein zusätzliches, insbesondere band- oder schnurartiges, einendig am Kupplungsteil und anderendig am Halteteil befestigbares Sicherungselement verliersicher mit dem einen Kupplungsteil zu verbinden.

Eine Steckverbindung ähnlicher Art, wie der eingangs genannten, ist aus der WO 2009/156399 A1 bekannt. In diesem Dokument wird das zusätzliche Sicherungselement als nachteilig angesehen. Um unter Verzicht auf ein derartiges zusätzliches Sicherungselement zu erreichen, dass bei einer geringen Verlustgefahr des Halteteiles mit verringertem Aufwand eine Positionierung des Halteteiles und die Wiedermontage erleichtert wird, ist vorgesehen, das Halteteil ringförmig auszubilden, wobei das Halteteil mit einer umfangsgemäß geschlossenen Ringkontur in einem Vormontagezustand und im Montagezustand mindestens eines der beiden Kupplungsteile umgibt. Das Halteteil kann dabei vorzugsweise an einem Steckerteil unverlierbar vormontierbar sein, wobei es in zwei Positionen, der Vormontagestellung und der Montagestellung fixierbar ist. Durch eine radiale Verschiebung gelangt es aus der Vormontagestellung in die Montagestellung bzw. durch eine gegensinnige Verschiebung zur Demontage aus der Montagestellung zurück in die Ursprungsposition. Hierbei ist insbesondere eine Formgestaltung bevorzugt, bei der eine von der Ringkontur umschlossene Ringöffnung im Querschnitt gesehen aus einer ersten kreisförmigen Teilöffnung mit einem Mittelpunkt im Bereich des Halteabschnitts und aus einer zweiten kreisförmigen Teilöffnung gebildet ist, deren Mittelpunkt innerhalb eines Sicherungsabschnitts des Halteteils liegt, wobei sich die beiden Teilöffnungen durchdringen. Dadurch hat das Halteteil zwangsläufig eine vergrößerte radiale Erstreckung, was insbesondere dann als nachteilig anzusehen ist, wenn nur sehr wenig Montageraum zur Verfügung steht. Unter "ringförmig" wird dabei auch eine ovale, elliptische o. ä. Gestalt subsumiert, wobei an dieser Längs- und Querseiten vorhanden sein können. Es muss sich also nicht zwangsläufig um einen Kreisring handeln.

Der vorliegenden Erfindung liegt die Aufgabe zugrunde, eine Steckverbindung der eingangs genannten Art sowie ein Halteteil für eine derartige Steckverbindung so zu verbessern, dass unter Beibehaltung der Vorteile des bekannten Verriegelungsprinzips die Montage und Demontage weiter vereinfacht werden kann, und zwar besonders auch in Anwendungsfällen, bei denen am Montageort, insbesondere für die Demontage, nur ein sehr geringer Umgebungsraum zur Verfügung steht, wobei eine geringe Verlustgefahr für das Halteteil gewährleistet werden soll.

Erfindungsgemäß wird dies durch eine Steckverbindung mit den technischen Merkmalen von Anspruch 1 erreicht.

Einerseits sind in der erfindungsgemäßen Steckverbindung die Vorteile des bekannten, gattungsgemäßen Verriegelungsprinzips mit den Vorteilen eines Steckrastprinzips kombiniert. Wenn das Halteteil unverlierbar an dem einen Kupplungsteil vormontiert ist, braucht das andere Kupplungsteil zur Montage nur noch axial gesteckt zu werden, was eine einfache, schnelle, komfortable und sichere automatisierte oder Einhand-Montage ermöglicht. Durch die erfindungsgemäße Ausgestaltung braucht andererseits bei einem Lösen der Verbindung keine stark raumgreifende radiale Verschiebung zur Demontage des Halteteiles durchgeführt werden, was von besonderem Vorteil an Montageorten mit nur geringem Umgebungsraum in radialer Richtung ist. Dabei ist mit besonderem Vorteil sogar auch eine Einfinger-Entriegelung möglich.

Erfindungsgemäß kann an dem Halteteil dabei bevorzugt durch ein Betätigen bzw. Drücken auf eine Druckfläche in einem umfangsgemäß zwischen zwei Halteabschnitten liegendem, insbesondere elastischem Betätigungsbereich des Halteteiles eine radiale Aufweitung herbeigeführt werden, die ausreichend ist, um ein Kupplungsteil wieder axial aus der Verbindung herauszuziehen. Einer der beiden Bünde des Halteabschnittes, der den Haltesteg des anderen Kupplungsteiles, an dem er im Montagezustand anliegt, bei der Demontage noch hintergreift, bleibt dabei in einer Ringnut des Kupplungsteiles axial fixiert, wodurch das Halteteil an diesem Kupplungsteil weiter festgehalten wird.

Eine vergleichbare technische Lösung ist auch schon in der deutschen Patentanmeldung DE 10 2012 104 288.8 für eine ähnliche Steckverbindung, wie die der eingangs genannten Art, vorgeschlagen worden, wobei jedoch das Halteteil keine offene, sondern eine umfangsgemäß geschlossene Ringkontur aufweist. Bei dieser früher vorgeschlagenen technischen Lösung kann dabei insbesondere vorgesehen sein, dass einer der beiden Bünde des Halteteiles einen nockenartigen, umfangsgemäß verlaufenden, vorzugsweise zusätzlich radial einwärts gewölbten Ansatz aufweist, durch den er sich in Größe und Form von dem anderen Bund unterscheidet und um den er - in axialer Projektion gesehen - gegenüber dem anderen Bund vorsteht. Bis auf diesen Ansatz sind die beiden Bünde ansonsten bevorzugt völlig gleichartig ausgebildet, insbesondere - in der Draufsicht gesehen - vorzugsweise kongruent. Während bei dieser früher vorgeschlagenen technischen Lösung die radiale Aufweitung, welche z. B. auch durch ein Ziehen bzw. Hebeln im Betätigungsbereich mit einem Werkzeug bewirkt werden kann, in Verbindung mit einer integralen Deformation des gesamten Halteteiles erfolgt, tritt erfindungsgemäß aufgrund der offenen Ringkontur nur eine Aufspreizung der Halteabschnitte gegeneinander ein, so dass ein Lösen des Halteteiles von dem Kupplungsteil, an dem es verbleiben soll, noch sicherer unterbunden werden kann.

Durch den Aufweitungsmechanismus des Aufspreizens kann im Montagezustand der Abstand des Betätigungsabschnitts zur Längsachse der Kupplungsteile bzw. auch der Abstand zu den Bünden der Kupplungsteile, insbesondere zu einem äußeren Rand des Bundes eines als Steckerteil ausgebildeten Kupplungsteiles, vorteilhafterweise kleiner ausgebildet sein als bei der früher vorgeschlagenen technischen Lösung. Dies ist insofern von Bedeutung, als dieser Abstand des Betätigungsabschnitts zu den Bünden der Kupplungsteile den Betätigungsweg zum Lösen der Verbindung darstellt und bestimmend für die Bauraumgröße der Steckverbindung ist.

Die offene Ringkontur des Halteteiles kann insbesondere dadurch gebildet sein, dass das Halteteil auf der dem Betätigungsbereich diametral gegenüber liegenden Seite den Schlitz aufweist.

Im Gegensatz zu der relativ großen Schlitzunterbrechung, wie sie am Halteteil bei einer Steckverbindung der bekannten Art in der WO 2006/018384 A1 vorgesehen ist, ist dieser Schlitz charakteristischerweise nur sehr klein. Er kann bevorzugt eine Größe aufweisen, die sich bevorzugt - bezogen auf eine Längsachse des Halteteils - durch einen Zentriwinkel beschreiben lässt, der kleiner ist als 15°, bevorzugt kleiner als 5°.

Die beiden Bünde des Halteteiles sind dabei erfindungsgemäß - in der Draufsicht gesehen - bevorzugt nur bereichsweise gleichartig ausgebildet und insbesondere vorzugsweise nicht kongruent. Insbesondere können sie dabei - bei zwar etwa gleicher Breite und durchgehend gleichartiger umfangsgemäßer, insbesondere kreisbogenförmiger Krümmung - unterschiedliche Umschlingungswinkel für das zwischen ihnen liegende Kupplungsteil und damit eine unterschiedliche umfangsgemäße Länge aufweisen.

Weitere vorteilhafte Ausgestaltungsmerkmale der Erfindung sind in den Unteransprüchen 2 bis 18 sowie der folgenden Beschreibung enthalten.

Anhand mehrerer bevorzugter, in der Zeichnung veranschaulichter Ausführungsbeispiele soll die Erfindung genauer erläutert werden. Dabei zeigen:
- Fig. 1: eine teilgeschnittene Perspektivansicht einer ersten Ausführung einer erfindungsgemäßen Steckverbindung mit einer ersten Ausführung eines Halteteiles bei gestecktem und verriegeltem Zustand der Kupplungsteile, wobei die Schnittebene teilweise durch eine Längsachse Y1-Y1 und teilweise durch eine Querachse Y2-Y2 verläuft, wie diese beispielsweise in Fig. 3 gezeigt sind,
- Fig. 2: ein axialer Längsschnitt durch die erste Ausführung einer erfindungsgemäßen Steckverbindung mit der ersten Ausführung eines Halteteiles,
- Fig. 3: einen Schnitt durch die erste Ausführung einer erfindungsgemäßen Steckverbindung mit der ersten Ausführung eines Halteteiles entlang der Linie III-III in Fig. 2,
- Fig. 4: einen Schnitt durch die erste Ausführung einer erfindungsgemäßen Steckverbindung mit der ersten Ausführung eines Halteteiles entlang der Linie IV-IV in Fig. 2,
- Fig. 5: einen Schnitt durch die erste Ausführung einer erfindungsgemäßen Steckverbindung mit der ersten Ausführung eines Halteteiles entlang der Linie V-V in Fig. 2,
- Fig. 6: eine Perspektivansicht der ersten Ausführung eines Halteteiles von oben,
- Fig. 7 und 8: jeweils aus unterschiedlichem Blickwinkel, Perspektivansichten der ersten Ausführung des Halteteiles von unten,
- Fig. 9: eine axial geschnittene Ansicht der in Fig. 1 dargestellten erfindungsgemäßen Steckverbindung bei der Montage, wobei sich das Halteteil im Vormontagezustand an einem Kupplungsteil befindet,
- Fig. 10: eine teilgeschnittene Perspektivansicht der ersten Ausführung einer erfindungsgemäßen Steckverbindung mit der ersten Ausführung eines Halteteiles bei der Demontage, wobei die Schnittebene entlang der Querachse Y2-Y2 verläuft,
- Fig. 11: in einer Fig. 3 entsprechenden Darstellung, einen Schnitt durch eine zweite Ausführung einer erfindungsgemäßen Steckverbindung mit einer zweiten Ausführung eines Halteteiles,
- Fig. 12: eine Perspektivansicht der zweiten Ausführung eines Halteteiles von oben, in einer Fig. 6 entsprechenden Darstellung,
- Fig. 13: eine Perspektivansicht einer dritten Ausführung eines Halteteiles von oben, in einer Fig. 12 entsprechenden Darstellung, jedoch kleiner und gedreht gegenüber Fig. 12,
- Fig. 14: in einer Fig. 11 entsprechenden Darstellung, einen Schnitt durch eine erfindungsgemäße Steckverbindung mit der dritten Ausführung des Halteteiles, jedoch kleiner als in Fig. 11,
- Fig. 15: in einer Fig. 14 entsprechenden Darstellung, einen Schnitt durch eine erfindungsgemäße Steckverbindung mit der dritten Ausführung des Halteteiles, jedoch in anderer Drehlage zum Steckerteil als in Fig. 14,
- Fig. 16: eine vorteilhafte Ausführung eines Details von Halteteil und Steckerteil in einer erfindungsgemäßen Steckverbindung.

In den verschiedenen Figuren der Zeichnung sind gleiche Teile stets mit den gleichen Bezugszeichen versehen und brauchen daher in der Regel jeweils nur einmal beschrieben zu werden.

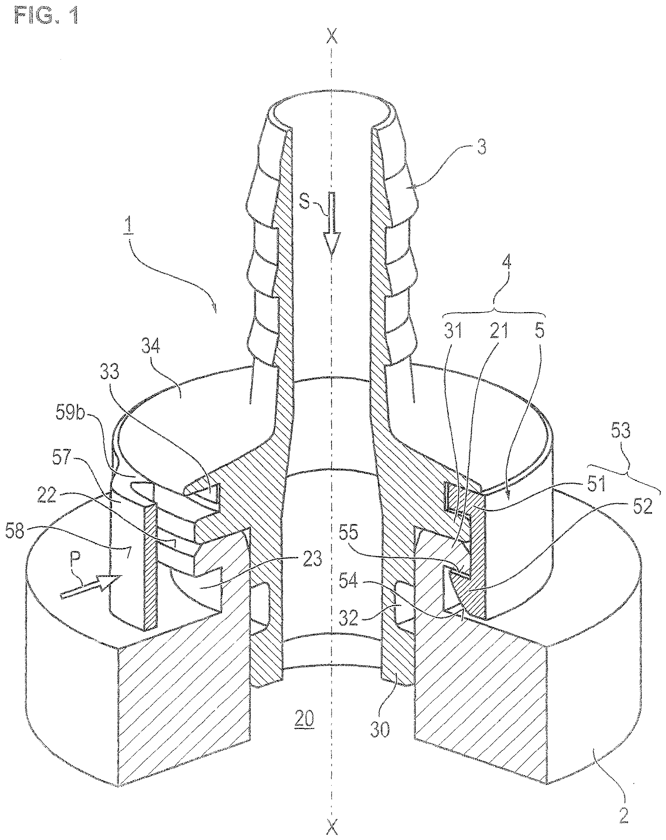

Eine erfindungsgemäße Steckverbindung 1, die insbesondere zum Verbinden von Fluidleitungen zum Einsatz kommen kann, umfasst zwei zusammensteckbare Kupplungsteile 2, 3, die in dem in Fig. 1 dargestellten Montagezustand ineinander eingesteckt und in diesem Zustand über eine Verriegelungseinrichtung 4 lösbar koaxial zueinander arretierbar sind. Bei den beiden zusammensteckbaren Kupplungsteilen 2, 3 handelt es sich insbesondere um ein Muffenteil 2 und um ein Steckerteil 3, welches mit einem Steckerschaft 30 dichtend in eine Aufnahmeöffnung 20 des Muffenteils 2 axial (Achse X-X) einsteckbar ist und dort im eingesteckten Zustand mittels der Verriegelungseinrichtung 4 festgehalten wird. Die beiden Kupplungsteile 2, 3 können bevorzugt beide aus Kunststoff bestehen.

Die Verriegelungseinrichtung 4 besteht dabei einerseits aus zwei äußeren, radialen, flanschartigen und im eingesteckten Zustand axial, in Steckrichtung (Pfeil S) benachbarten Haltestegen 21, 31 der beiden Kupplungsteile 2, 3 und andererseits aus einem Halteteil 5. Auch das Halteteil 5 kann insbesondere zur Verwendung bei geringeren Fluiddrücken mit Vorteil als Kunststoff-Formteil ausgebildet sein, wobei z. B. auch ein thermoplastisches Elastomer-Material eingesetzt werden kann.

Zur Abdichtung der Steckverbindung 1 kann bevorzugt am Steckerschaft 30 eine Ringnut 32 vorgesehen sein, in die eine nicht dargestellte Umfangsdichtung, insbesondere in Form eines Dichtrings, eingebracht werden kann.

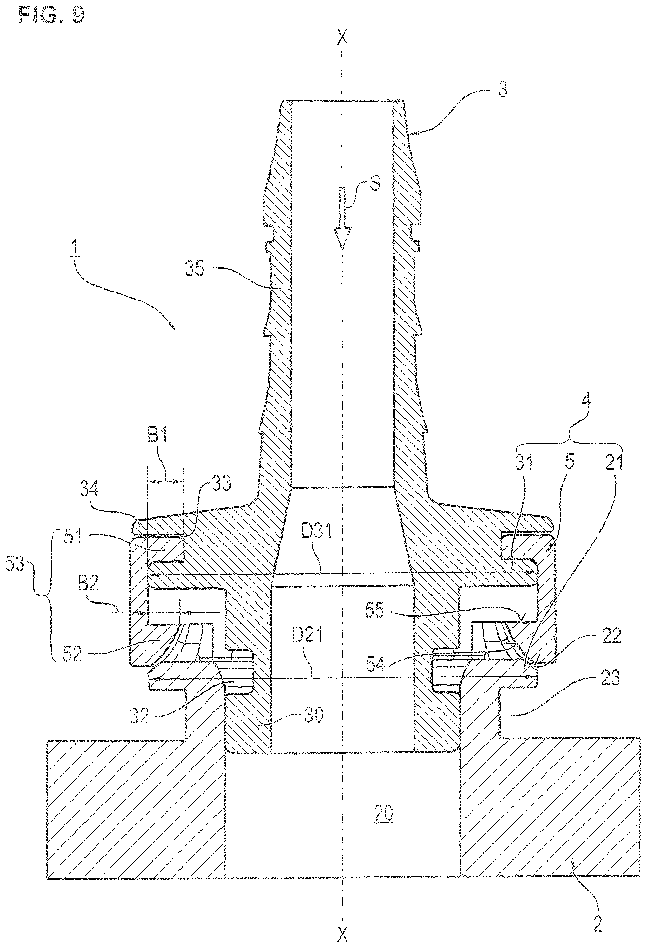

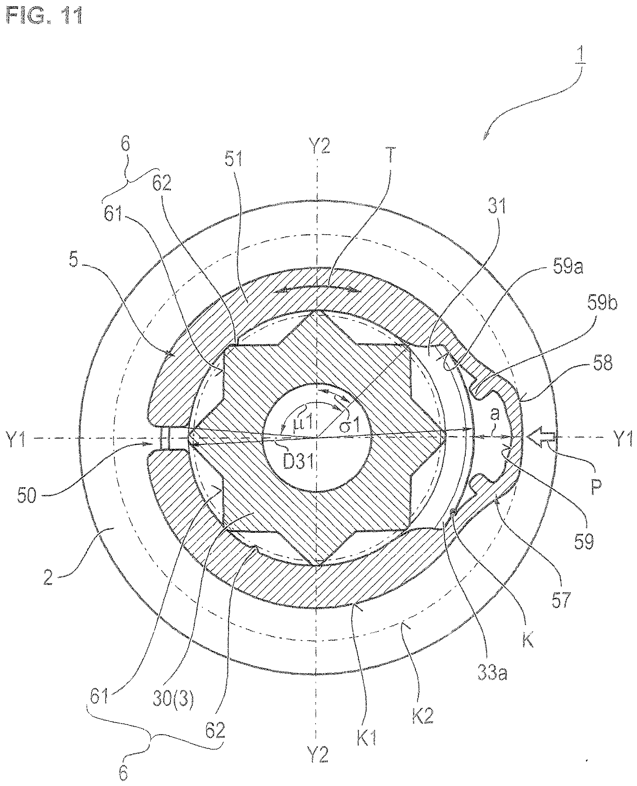

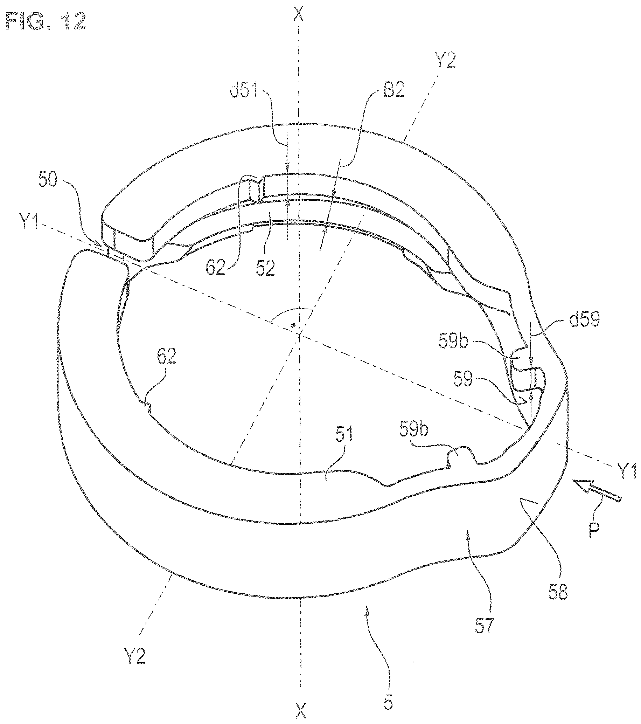

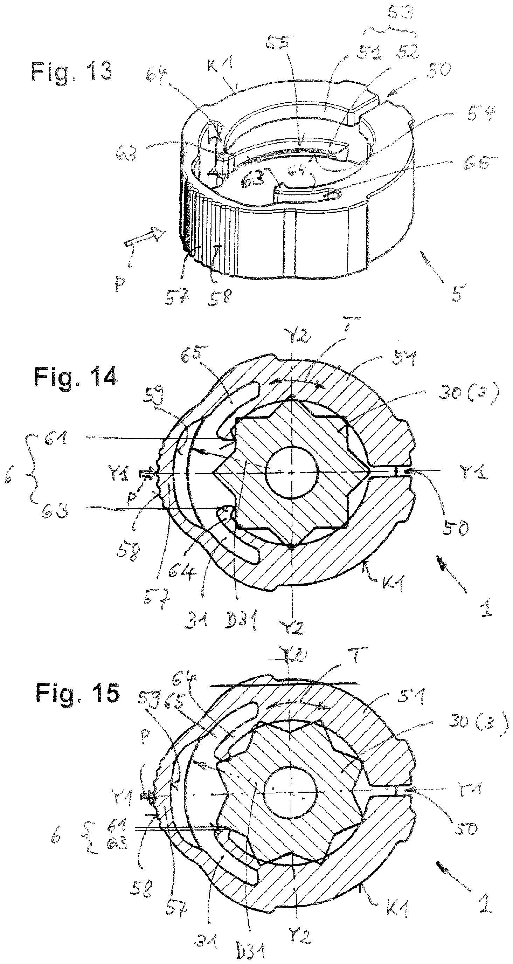

Das Halteteil 5, welches in Fig. 1 bis 10 in einer ersten, in Fig. 11 und 12 in einer zweiten und in Fig. 13 bis 15 in einer dritten Ausführung dargestellt ist, weist eine nicht näher bezeichnete, umfangsgemäß durch einen Schlitz 50 gekennzeichnete, offene, im eingangs erwähnten weiteren Sinn als Ring verstandene Kontur auf und kann in einem in Fig. 9 gezeigtem Vormontagezustand an einem der beiden Kupplungsteile 2, 3 - in der gezeigten Ausführung am Steckerteil 3 - axial und radial fixiert unverlierbar montiert werden. Die beidseitig des Schlitzes 50 befindlichen Ringabschnitte können auch als Längsseiten bezeichnet werden, welche symmetrisch zu einer längsgerichteten Mittenachse Y1-Y1 des Halteteils 5 verlaufen.

Grundsätzlich ist das Halteteil 5 als einteilige elastische Ringklammer ausgebildet, die zur radialelastischen Verformbarkeit in einem Umfangsbereich den axial und radial durchgehende Schlitz 50 als Unterbrechung einer geschlossenen Ringform aufweist, so dass zwei federelastische, bogenförmige Rastarme gebildet sind, die jeweils mindestens einen C-förmigen Halteabschnitt 53 aufweisen bzw. bilden. Das Halteteil 5 ist dadurch quer zur Steckachse X-X unter elastischer Aufweitung montierbar und demontierbar.

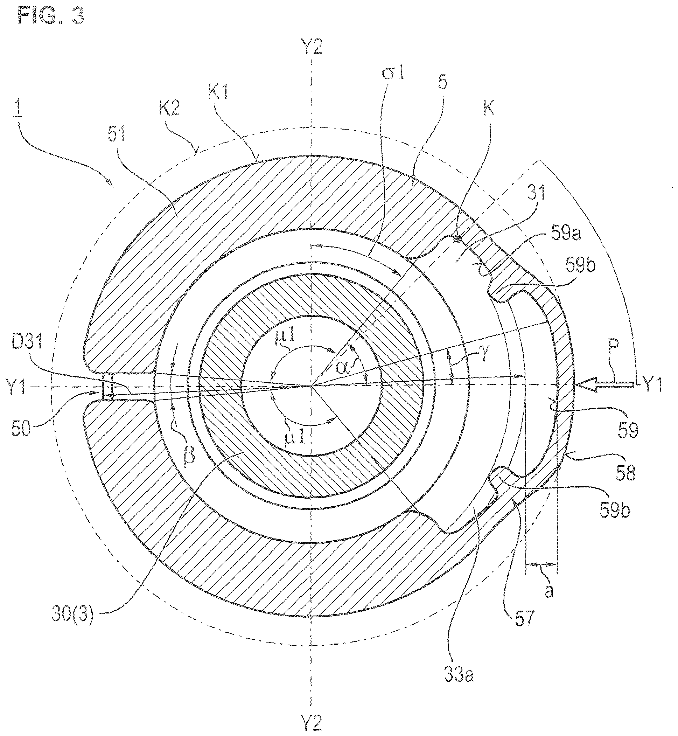

Zur Montage kann aus dem Vormontagezustand heraus zunächst eine federelastische Aufweitung, dann ein Überstreifen des Halteteils 5 über das andere, nicht vormontierte Kupplungsteil 2 und eine anschließende federelastische Rückverformung erfolgen. Die Unverlierbarkeit des Halteteils 5 wird dabei einerseits durch seine nur gering geöffnete Ringform bestimmt, die aufgrund der geringen Schlitzweite des Schlitzes 50 nur wenig von einer geschlossenen Ringform abweicht. Dadurch, dass das Halteteil 5 die Kupplungsteile 2, 3 mit einem Winkel von nahezu 360°, also fast vollständig, umschließt, ist ein zusätzliches Sicherungselement, welches Unverlierbarkeit gewährleisten müsste, vorteilhafterweise nicht erforderlich. Die Schlitzweite des Schlitzes 50 kann dabei insbesondere durch die Darstellungen in Fig. 3 bis 5 definierten Schlitzöffungswinkel ß zwischen den beidseitig des Schlitzes 50 liegenden, nicht näher bezeichneten Enden des Halteteiles 5 beschrieben werden, der insbesondere kleiner ist als 15°, vorzugsweise kleiner ist als 5°. Die Schenkel des Schlitzöffungswinkels ß gehen dabei von der Mittenachse X-X aus und enden beidseitig des Schlitzes 50.

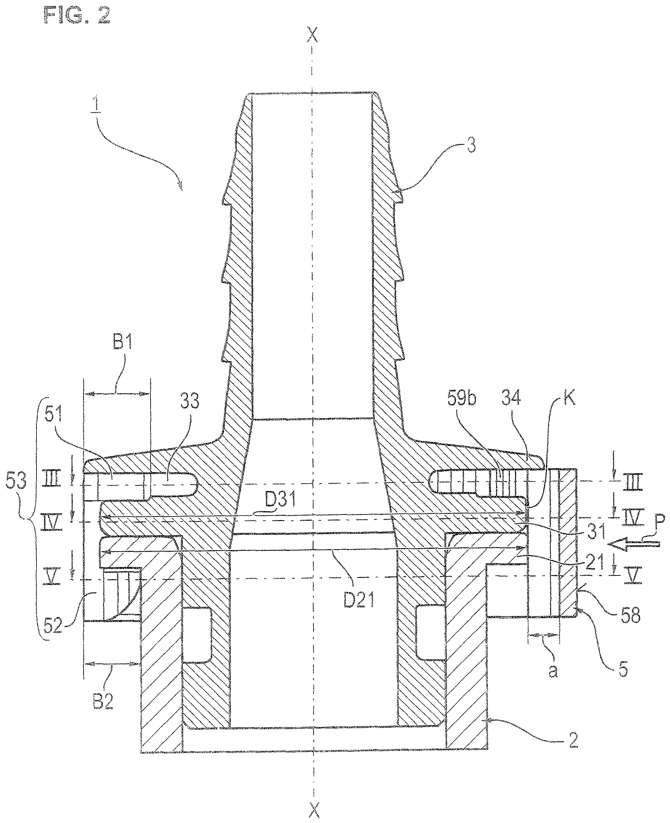

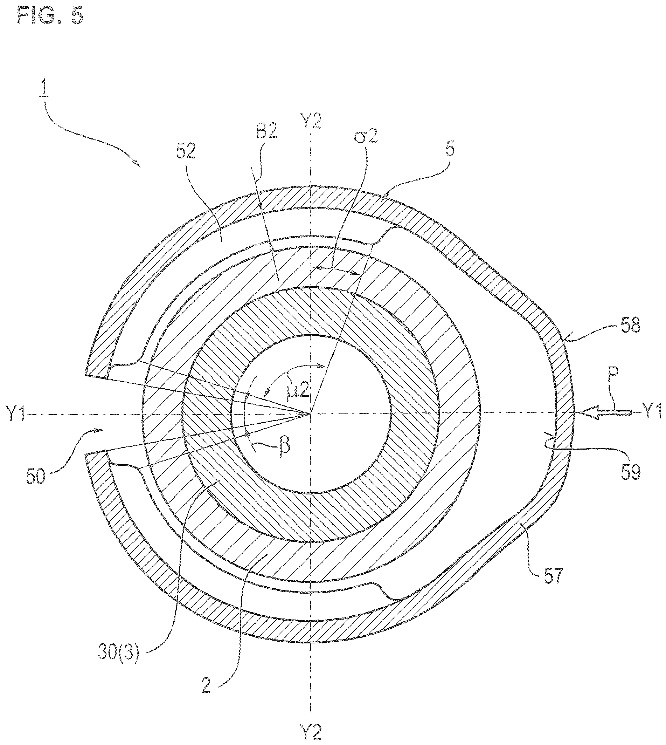

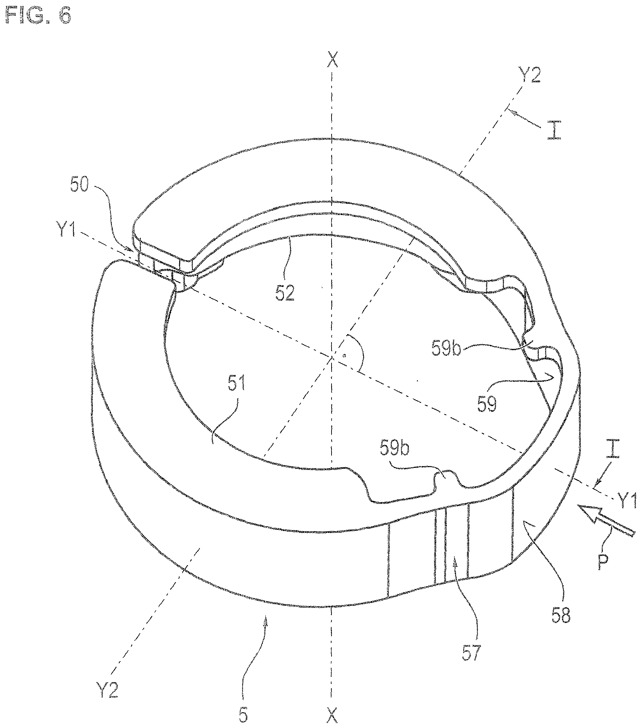

Aus den Darstellungen des Halteteiles 5, wie aus den Einzelteildarstellungen des Halteteiles in Fig. 6 bis 8 und aus der Darstellung des in Fig. 5 gezeigten Vormontagezustandes, sowie aus den Darstellung des in Fig. 1 und 2 gezeigten Montagezustandes geht dabei hervor, dass das Halteteil 5 mindestens einen im Axialschnitt - bzw. auch in einem Radialschnitt - C-förmigen, zwei Bünde 51, 52 aufweisenden, radial elastisch beweglichen Halteabschnitt 53 aufweist, der nach der Montage die Haltestege 21, 31 der beiden Kupplungsteile 2, 3 axial und radial formschlüssig umgreift. Vorzugsweise sind zwei derartige Halteabschnitte 53 vorhanden, die symmetrisch zu einer Längsachse Y1-Y1 des Halteteiles 5 liegen. Die noch nachfolgend beschriebene Ausbildung der Bünde 51, 52 der Halteabschnitte 53 trägt ebenfalls bestimmend zur Unverlierbarkeit des Halteteils 5 bei. Genauer gesagt handelt es sich bei den Bünden 51, 52 um umfangsgemäß verlaufende Ringbundabschnitte, vereinfachend wird hier im Weiteren jedoch zur Bezeichnung Derselben nur von "Bünden" gesprochen.

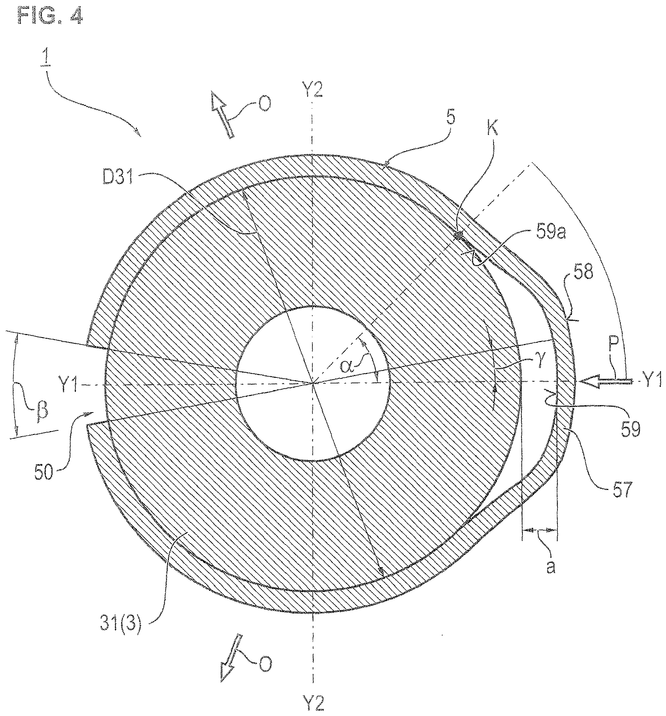

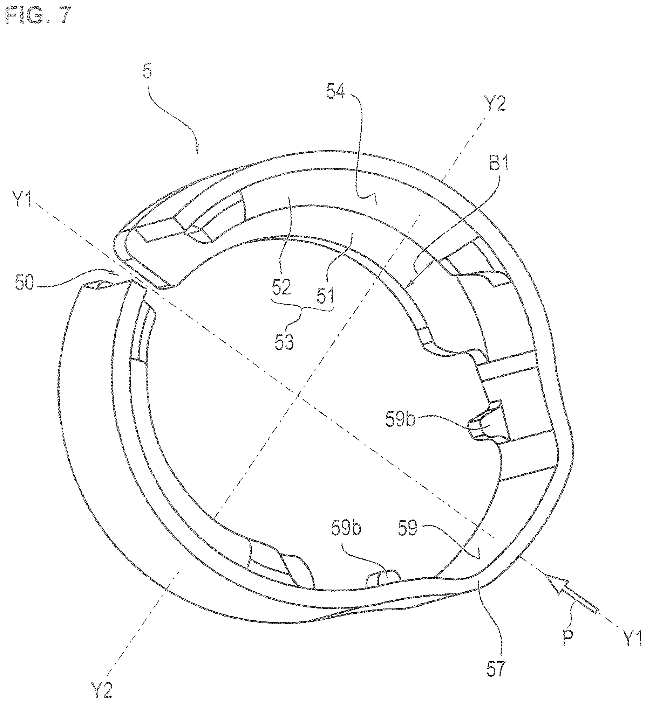

Wie aus der Angabe der Lage der Schnittebenen in Fig. 2 hervorgeht, zeigen Fig. 3 dabei eine Schnittdarstellung durch den in Fig. 1 und 2 oben liegenden Bund 51, Fig. 4 eine Schnittdarstellung zwischen den Bünden 51, 52 im Bereich des Haltesteges 31 des Steckerteiles 3 und Fig. 5 eine Schnittdarstellung zwischen den Bünden 51, 52 im Bereich unterhalb des Haltesteges 21 des Muffenteiles 2 mit Draufsicht auf den unteren Bund 52 des Halteteiles 5. Eine exemplarische Ausführung des ersten, in Fig. 1, 2, 9 und 10 oberen, Bundes 51 des Halteabschnitts 53 und eine exemplarische Ausführung des zweiten, unteren Bundes 52 sind sehr deutlich dem oberen Teil von Fig. 7 zu entnehmen, in der jeweils der obere Bund 51 unten und der untere Bund 52 oben liegt.

In allen dargestellten Ausführungen sind jeweils zwei, symmetrisch bezüglich einer in Fig. 3 bis 8 dargestellten Längsachse Y1-Y1 des Halteteiles 5 auf einer Querachse Y2-Y2 diametral einander gegenüber liegende Halteabschnitte 53 vorgesehen, wobei aber auch durch eine optionale umfangsgemäße Segmentierung der Halteabschnitte 53 eine größere Anzahl von Haltebereichen vorhanden sein könnte.

Der zweite Bund 52 eines jeden Halteabschnittes 53 des Halteteiles 5 ist als Rastelement mit einer radialen inneren Schrägfläche 54 ausgebildet, die vorzugsweise konvex ausgebildet sein kann und die auf der beim Steckvorgang (Fig. 9) dem Muffenteil 2 zugewandten Seite liegt. Wenn - wie Fig. 9 zeigt - das Steckerteil 3, an dem das Halteteil 5 vormoniert ist, zur Montage, die mit einer Verrastung abschließt, entlang der Achse X-X in Steckrichtung S in die Aufnahmeöffnung 20 des Muffenteils 2 eingesteckt wird, wirkt diese Schrägfläche 54 als Spreizfläche für das Halteteil 5 bzw. genauer für dessen zweiten Bund 52.

Für eine Vormontage-Fixierung des Halteteiles 5 kann das zugehörige Kupplungsteil 2, 3 bevorzugt - wie in Fig. 9 dargestellt - das Steckerteil 3, zur Bildung einer Umfangsnut 33, die den korrespondierenden radialen Bund 51 des Halteteiles 5 aufnimmt, einen zusätzlichen Fixierringsteg 34 aufweisen. Dieser kann bevorzugt einen Durchmesser aufweisen, der größer als der Durchmesser des Haltesteges 31 ist. Der Durchmesser des Haltesteges 31 entspricht stattdessen vorzugsweise etwa einem Innendurchmesser des Haltebereiches 53 in einem Innenflächenbereich zwischen den Bünden 51, 52.

Indem die Spreizfläche 54 relativ zu einer Gegen-Spreizfläche 22 des als Gegenrastelement wirkenden Haltesteges 21 gleitet, bewirkt dies unter der Wirkung einer Montagekraft beim Einstecken um einen bestimmten axialen Montageweg eine radial nach außen gerichtete Spreizbewegung des Halteteiles 5 quer zur Achse X-X um einen radialen Spreizweg. Nach Erreichen des Endes des Spreizweges hintergreift der Bund 52 formschlüssig rastend mit einer radialen Haltekante 55 den Haltesteg 21 des Muffenteiles 2, so dass sich eine in Steckrichtung S wirkende formschlüssige Rastverbindung ausbildet, wie sie Fig. 1 und 2 zeigen. Beim Zusammenstecken der Kupplungsteile 2, 3 wird also der Halteabschnitt 53 durch den sich dazu relativ bewegenden Haltesteg 21 radial nach außen bewegt und nach einer nachfolgenden radialen Zurückbewegung nach innen umgreift er im eingesteckten Zustand C-förmig verriegelnd die Haltestege 21, 31 der beiden Kupplungsteile 2, 3.

In besonders bevorzugter Ausbildung kann dabei eine der Gegen-Spreizfläche 22 zugewandte Kontur der Spreizfläche 54 derart auf eine der Spreizfläche 54 zugewandte Gegen-Kontur der Gegen-Spreizfläche 22 abgestimmt sein, dass sich der Spreizweg beim Einstecken in Abhängigkeit vom Montageweg nichtlinear, insbesondere in verschiedenen Montagephasen beim Einstecken zumindest teilweise überproportional, proportional und/oder unterproportional, ändert. Dadurch kann einerseits eine während des Steckens maximal aufzuwendende Montagekraft verringert werden, indem die optimierte Montageweg-Montagekraft-Charakteristik es gestattet, die Höhe von während des Steckens auftretenden Montagekraft-Peaks zu verringern. Andererseits ist es möglich, eine gleichmäßige Verteilung der für die Montage aufzuwendenden Arbeit über den gesamten Steckvorgang zu erzielen. Dabei ist es mit Vorteil zusätzlich auch möglich, den gesamten Montageweg im Vergleich zu einer Ausbildung mit ebener Spreizfläche 54 zu verkürzen, was insbesondere unter dem Aspekt einer Minimierung des notwendigen Bauraums zu - Vorteilen führt.

Die Bünde 51, 52 des jeweiligen Halteabschnittes 53 können, wie Fig. 1 zeigt im Montagezustand den Schaft 30 des Steckerteiles 3, vorzugsweise im Bereich der Umfangsnut 33 des Steckerteiles 3, und das Muffenteil 2, unterhalb seines Haltesteges 21, d. h. auf der dem Steckerteil 3 abgewandten Seite, vorzugsweise im Bereich einer Umfangsnut 23 des Muffenteils 2, formschlüssig umgreifen.

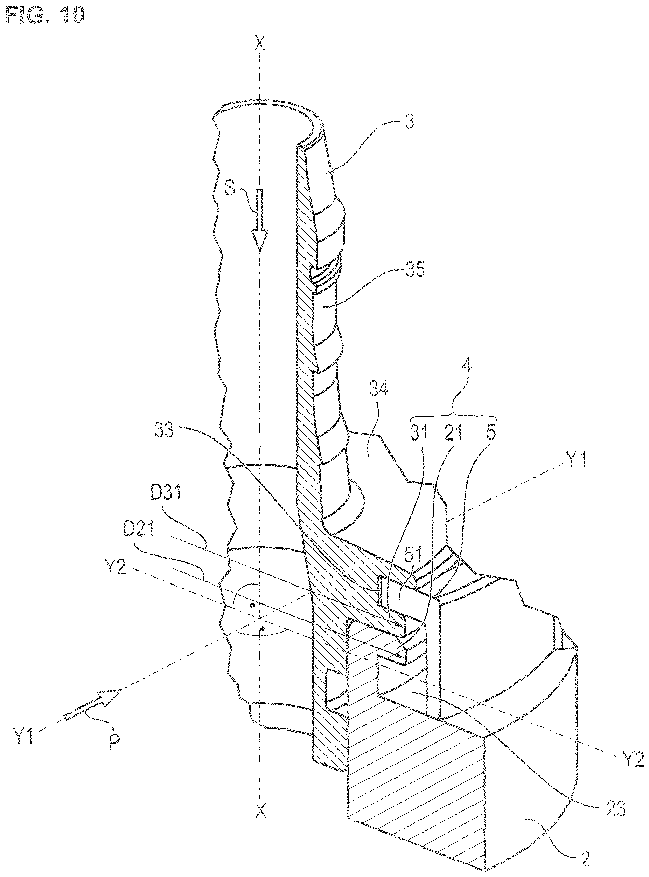

In der erfindungsgemäßen Steckverbindung 1 bzw. für das Halteteil 5 ist vorgesehen, dass die Bünde 51, 52 im Halteabschnitt 53 des Halteteiles 5 derart mit unterschiedlicher Größe und/oder Form ausgebildet sind, dass bei einer radial elastischen Bewegung des Halteabschnittes 53 aus dem Montagezustand heraus nach außen ein Bund 52, der im Montagezustand am Haltesteg 21 des einen Kupplungsteiles 2 anliegt, diesen Haltesteg 21 des Kupplungsteiles 2 freigibt, während der andere Bund 51, zumindest bereichsweise, den Haltesteg 31 des anderen Kupplungsteiles 3, an dem er anliegt, noch hintergreift. Diese Ausbildung wird insbesondere durch Fig. 10 veranschaulicht, die insbesondere die Freigabe des Haltesteges 21 des Muffenteiles 2 durch den unteren, zweiten Bund 52 und den Eingriff des oberen, ersten Bundes 51 in der Umfangsnut 33 des Steckerteiles 3 zeigt.

Der untere Bund 52 ist in dieser Darstellung nicht zu sehen, da er in Richtung des in der Längsachse Y1-Y1 liegenden Pfeiles p aus der Ebene der Querachse Y2-Y2 in der Umfangsnut 23 des Kupplungteiles über den Außendurchmesser Außendurchmesser D21 des Haltesteges 21 im Bereich der Querachse Y2-Y2 hinweg von der Schnittebene weg in der perspektivischen Darstellung nach hinten verschoben ist.

Die radial elastischen Bewegung des Halteabschnittes 53 aus dem Montagezustand heraus nach außen erfolgt dabei erfindungsgemäß bevorzugt bei Vorhandensein von mindestens zwei Halteabschnitten 53, die symmetrisch zur Längsachse Y1-Y1 des Halteteiles 5 liegen, in deren Ebene sich der Schlitz 50 des Halteteiles 5 befindet. Die Halteabschnitte 53 führen dabei eine zangenartige Spreizbewegung gegeneinander aus, wobei sich der Schlitzöffungswinkel ß zwischen den beidseitig des Schlitzes 50 liegenden Enden des Halteteiles 5 vergrößert.

Durch eine Betrachtung der Figuren 2, 3, 5 sowie 7 bis 9 lässt sich leicht feststellen, dass die beiden Bünde 51, 52 - in der Draufsicht gesehen - bevorzugt nur bereichsweise gleichartig ausgebildet und insbesondere vorzugsweise nicht kongruent sind. Insbesondere können sie dabei - bei zwar etwa jeweils gleicher Breite B1 (Fig. 2, 7 bis 9) und B2 (Fig. 2, 5, 9) und durchgehend gleichartiger umfangsgemäßer, insbesondere kreisbogenförmiger Krümmung - unterschiedliche Umschlingungswinkel µ1, µ2 für das zwischen ihnen liegende Kupplungsteil 2, 3 und damit eine unterschiedliche umfangsgemäße Länge aufweisen.

Der obere, erste Bund 51 umfasst dabei jeweils im Montagezustand das Steckerteil 3 über einen größeren Winkelbereich µ1 als der Winkelbereich µ2, um den der untere, zweite Bund 52 das Muffenteil 2 umfasst. Anders ausgedrückt: Ein Zentriwinkel µ1, der zwischen Anfang und Ende des fixierend wirkenden Bereichs des ersten Bundes 51 aufgespannt ist (Fig. 3), ist größer als ein entsprechender Winkel µ2 des zweiten Bundes 52 (Fig. 5). Die Zentriwinkel µ1 der jeweiligen oberen Bünde 51 der Haltebereiche 53 sind dabei so groß, dass die Bünde 51 dabei immer - also nach der Vormontage, nach der Montage und insbesondere auch bei der Demontage (Fig. 10), bei der ein gespreizter Zustand des Halteteiles 5 vorliegt - sich zumindest bereichsweise, in die Umfangsnut 33 des Steckerteils 3 hinein erstrecken.

Auf diese Weise wird das Halteteil 5 durch die Bünde 51, die den Haltesteg 31 des Steckerteils 3 - an dem sie im Montagezustand (und auch im Vormontagezustand) anliegen, noch hintergreifen, in der Ringnut 33 des Kupplungsteiles 3 axial fixiert und festgehalten.

Der Zentriwinkel µ1, der zwischen Anfang und Ende des fixierend wirkenden Bereichs des ersten Bundes 51 aufgespannt ist (Fig. 3), kann dabei insbesondere im Bereich von jeweils 115° bis 135° liegen, wodurch sich eine Gesamtumschlingung des Steckerteils 3 im Bereich von 230° bis 270° ergibt. Der Zentriwinkel µ2, der zwischen Anfang und Ende des fixierend wirkenden Bereichs des zweiten Bundes 51 aufgespannt ist (Fig. 5), kann dabei insbesondere im Bereich von jeweils 80° bis 110° liegen, wodurch sich eine Gesamtumschlingung des Muffenteils 2 im Bereich von 160° bis 220° ergibt. Der obere Bund 51 weist somit eine größere Umschlingung auf als der untere Bund 52.

An mindestens einer Querseite des Halteteils 5 - also zwischen den Längsseiten an einem Ende bzw. beiden Enden der Längsachse Y1-Y1 - kann bevorzugt umfangsgemäß ein zwischen den Bünden 51, 52 der Halteabschnitte 53 liegender, vorzugsweise - zumindest bereichsweise - elastischer Betätigungsbereich 57 ausgebildet sein, in dem durch manuellen Druck auf eine Druckfläche 58 (Druckpfeil p in Fig. 2 bis 8 und 10), vorteilhafterweise mit nur einem Finger, bei der Demontage durch Aufspreizen eine radiale Aufweitung der Halteabschnitte 53 herbeigeführt werden kann, die ausreichend ist, um ein Kupplungsteil 2, 3 - im vorliegenden Fall das Muffenteil 2 - wieder axial aus der Steckverbindung 1 herauszuziehen. Das bedeutet, dass der gegenseitige Abstand zwischen den bezüglich der Längsachse Y1-Y1 des Halteteils 5 einander gegenüber liegenden unteren Bünden 52 so weit vergrößert wird, dass er größer ist als der Durchmesser D21 des Haltesteges 21 des Kupplungsteiles 2. Der gegenseitige Abstand zwischen den bezüglich der Längsachse Y1-Y1 des Halteteils 5 einander gegenüber liegenden oberen Bünden 51 wird dabei im Gegensatz dazu nur so weit vergrößert wird, dass er noch kleiner ist als der Durchmesser D31 des Haltesteges 31 des Steckerteiles 3.

Der Betätigungsbereich 57 fängt in der dargestellten Ausführung - was am besten durch Fig. 3 veranschaulicht wird - am umfangsgemäßen Ende (Winkelschenkel von µ1) des einen Halteabschnittes 53 an und endet am umfangsgemäßen Ende (Winkelschenkel von µ1) des gegenüberliegenden Halteabschnittes 53. Während das Halteteil 5 im Bereich der Betätigungsbereiche 53 eine durch den Schlitz 50 unterbrochene zylindrische (im dargestellten Schnitt kreisbogenförmige) Außenkontur K1 aufweist, ragt der Betätigungsbereich 57 schlaufenartig von dieser Außenkontur K1 ab, wobei die Druckfläche 58 auf einem Umkreis K2 liegt, welche die radiale Baugröße des Halteteiles 5 begrenzt.

Ein innerer Wandbereich 59 des Halteteiles 5, der im Betätigungsbereich 57 der Druckfläche 58 gegenüber liegt, kann dabei bevorzugt einen Anschlag bilden, wobei er, wenn er um einen Betätigungsweg a (Fig. 2 bis 4) in Richtung der Längsachse Y1-Y1 des Halteteiles 5 bewegt wird, am Ende des Demontagevorgangs zur Anlage am Kupplungsteil 3 kommt, insbesondere an dessen Schaft 30, noch konkreter an dem Haltesteg 31 des Schaftes 30. Zur Umsetzung der auf die Druckfläche 58 ausgeübten manuellen Betätigungs-Druckkraft p (Druckpfeil p in Fig. 3 bis 8, 11 und 12) in die Aufspreizbewegung der Halteabschnitte 53 ist dabei eine Kraftumlenkung maßgeblich, die vom Beginn der Demontage an in einem Randabschnitt 59a des inneren Wandbereiches 59 an einer Berührungslinie K - siehe Fig. 2 sowie Fig. 3 und 4, in Letzteren als Punkt K dargestellt - zwischen dem Betätigungsbereich 57 und dem Haltesteg 31 des Schaftes 30 auftritt. Diese Berührungslinie K stellt bei der Aufspreizbewegung der Halteabschnitte 53 jeweils die Schwenkachse dar. Die umfangsgemäße Lage der Berührungslinie K kann dabei durch einen Winkel α definiert werden, der zwischen einem zur Berührungslinie K führenden Radialstrahl und der Längsachse Y1-Y1 aufgespannt ist.

Das Drücken des Betätigungsbereiches 57 gegen den Haltesteg 31 führt einerseits zum Aufspreizen der Halteabschnitte 53 im Sinne der in Fig. 4 dargestellten Pfeile O. Gleichzeitig mit der Aufspreizung der Halteabschnitte 53 erfolgt andererseits unter der Wirkung der Druckkraft p eine Verschiebung des Halteteiles 5 entlang seiner Längsachse Y1-Y1 radial nach innen, wobei sich der Betätigungsbereich 57 elastisch deformiert. Hierbei ist es im Sinne einer gleichmäßigen Öffnungs- bzw. Spreizbewegung von Vorteil, wenn der Winkel a, unter dem die Berührungslinie K zur Längsachse Y1-Y1 des Halteteiles 5 steht, annähernd konstant bleibt, wobei der Winkel α optimalerweise in einem Bereich von 40° und 50°, vorzugsweise bei 45° liegen kann. Der innere Wandbereich 59 gleitet dabei unter Deformation über den Haltesteg 31, bis der Betätigungsweg a zurückgelegt ist. Wenn dies geschehen ist, kann sich der innere Wandbereich 59 an der Berührungslinie K in einer Position befinden, die durch einen in Fig. 3 und 4 mit dem Bezugszeichen γ gekennzeichneten Endwinkel der Demontage charakterisiert ist, der vorzugsweise im Bereich von 10° bis 20°, bevorzugt bei 15°, liegen kann. Bei der Demontage rollt das Halteteil 5 an der Berührungslinie K unter Deformation somit bevorzugt über einen Umfangswinkel α - γ von etwa 25° bis 35°, bevorzugt von 30° ab.

Der Randabschnitt 59a des inneren Wandbereichs 59, der infolge der Verschiebebewegung des Halteteiles 5 während des Aufspreizens der Halteabschnitte 53 über die Berührungslinie K gleitet, kann mit Vorteil durch seine Konturgestaltung daran angepasst sein. Er rollt somit über die Berührungslinie ab.

Die radiale Einwärts-Verschiebung des Halteteils 5 wird solange fortgeführt, bis - wie bereits erwähnt - der gegenseitige Abstand auf der Querachse Y2-Y2 zwischen den bezüglich der Längsachse Y1-Y1 des Halteteils 5 einander gegenüber liegenden unteren Bünden 52 so groß ist, dass er größer ist als der Durchmesser D21 des Haltesteges 21 des Muffenteiles 2, wie dies Fig. 10 zeigt. Dann kann das Muffenteil 2 vom Steckerteil 3 entfernt und in axialer Richtung X-X aus der erfindungsgemäßen Steckverbindung 1 herausgezogen werden. Dadurch, dass der gegenseitige Abstand auf der Querachse Y2-Y2 zwischen den bezüglich der Längsachse Y1-Y1 des Halteteils 5 einander gegenüber liegenden oberen Bünden 51 aber immer noch kleiner ist als der Durchmesser D31 des Haltesteges 31 des Steckerteiles 3, wird das Halteteil 5 dabei am Steckerteil 3 festgehalten.

Hierbei spielt auch eine Winkeldifferenz σ1 - σ2 (Fig. 3, Fig. 5) zwischen den jeweiligen, dem Betätigungsabschnitt 57 zugewandten Enden des oberen Bundes 51 und des unteren Bundes 52 eine Rolle. Diese Winkeldifferenz σ1 - σ2 sollte optimalerweise im Bereich zwischen 15° und 40° liegen. Sie kann dabei berechnet werden, indem von dem Winkel σ1, bei dem es sich um den Winkel handelt, der zwischen dem dem Betätigungsabschnitt 57 zugewandten Ende des fixierend wirkenden Bereichs des ersten Bundes 51 und der Querachse Y2-Y2 aufgespannt ist (Fig. 3), der Winkel σ2 abgezogen wird, bei dem es sich um den Winkel handelt, der zwischen dem dem Betätigungsabschnitt 57 zugewandten Ende des fixierend wirkenden Bereichs des zweiten Bundes 52 und der Querachse Y2-Y2 aufgespannt ist (Fig. 5). Der Winkel σ1 ist dabei ein Teil des Zentriwinkels µ1, und der Winkel σ2 ist ein Teil des Zentriwinkels µ2.

Nach Wegfall der aufgebrachten Druckkraft-Belastung p gelangt das Halteteil 5 durch ein federelastisches Zurückspringen seiner Halteabschnitte 53 auf einfache Weise in eine Lage, wie sie vor der Deformation vorlag. Sofern das Muffenteil 2 entfernt wurde, liegt dann wieder der Vormontagezustand vor.

Zur Vormontage-Fixierung des Halteteils 5 (Fig. 9) ist ergänzend zu bemerken, dass diese nach einem axialen Aufschieben des einstückigen Halteteiles 5 auf das Steckerteil 3 durch ein kraftformschlüssiges radiales Aufrasten seiner Haltebereiche 53 auf das Kupplungsteil 3 erfolgt, wobei das Halteteil 5 im Bereich seiner Haltebereiche 53 maximal auseinander gespreizt wird. Nach der Vormontage liegt dann ein Umfassungswinkel der Haltebereiche 53 für das Steckerteil 3 vor, der als doppelter Wert des in Fig. 3 dargestellten Zentriwinkels µ1 ergibt.

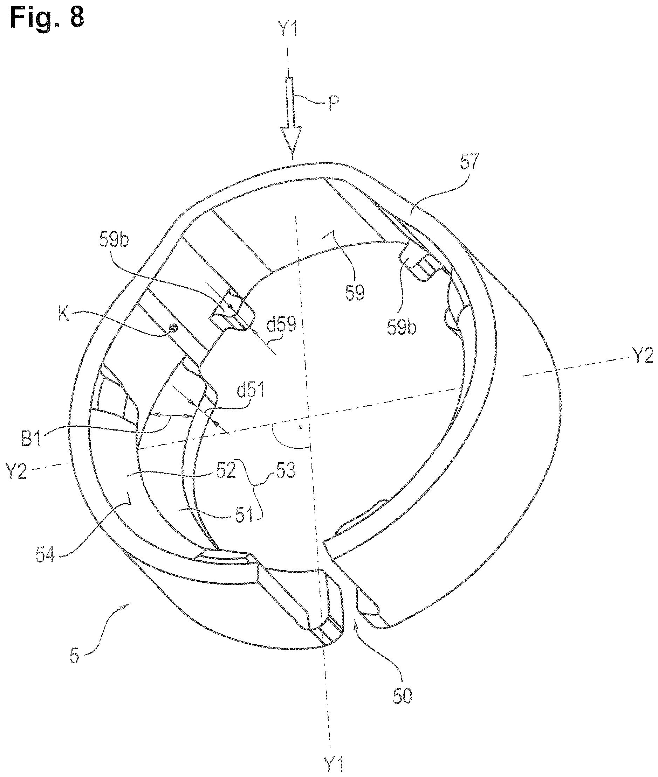

In vorteilhafter Ausführung der Erfindung, die insbesondere durch Fig. 1 bis 3 sowie 6 bis 8 veranschaulicht wird, sind im Bereich des Betätigungsbereiches 57 des Halteteiles 5 vom inneren Wandbereich 59 ausgehende, radial nach innen weisende Führungs- und Stabilisierungsnocken 59b vorgesehen. Diese Führungs- und Stabilisierungsnocken 59b liegen bevorzugt in der Ebene der oberen Bünde 51 und gleiten dadurch bei der Demontage auch jeweils in der Umfangsnut 33 zur Aufnahme der oberen Bünde 51, die sich zwischen dem Haltesteg 31 und dem Fixierringsteg 34 des Steckerteils 3 befindet. Die Führungs- und Stabilisierungsnocken 59b erfüllen die Funktion, zu gewährleisten, dass sich das Halteteil 5 während der Demontage nicht in der axialen Richtung X-X der Steckverbindung 1 verschiebt. Es kann dabei bevorzugt vorgesehen sein, dass die Umfangsnut 33 eine gestufte Breite aufweist, d. h. dass sie von ihrem radial innenliegenden Nutgrund ausgehend zur Aufnahme der oberen Bünde 51 schmaler ist als in ihrem radial außen liegenden Bereich, der zur Aufnahme der Führungs- und Stabilisierungsnocken 59b dient. Diese Stufung der Umfangsnut, verhindert, dass die Führungs- und Stabilisierungsnocken 59b bei der Demontage zu tief in die Umfangsnut 33 hineingedrückt werden. Den unterschiedlichen Nutbreiten, die in der Zeichnung nicht durch Bezugszeichen gekennzeichnet sind, entsprechen in korrespondierender Weise unterschiedliche Dicken d51, d59 der oberen Bünde 51 und der Führungs- und Stabilisierungsnocken 59b. Die Bünde 51 weisen dabei eine geringere Dicke d51 auf als die Dicke d59 der Führungs- und Stabilisierungsnocken 59b (siehe dazu Fig. 8). Die Stufung der Umfangsnut 33 ist in Fig. 3 durch das Bezugszeichen 33a angedeutet.

Die zweite Ausführung unterscheidet sich von der ersten durch die anhand der Fig. 11 und 12 nachstehend beschriebenen technischen Merkmale. Diese Merkmale erfüllen den allgemeinen Zweck, die erfindungsgemäße Steckverbindung 1 noch weiter dahingehend zu verbessern, dass bei einer Montage in engen Bauräumen Kollisionen mit sonstigen, umliegenden Bauteilen vermieden werden können.

Dazu ist vorgesehen, dass das Halteteil 5 in seinem auf dem Kupplungsteil 2, 3 sitzenden Zustand über Fixiermittel 6 derart mit dem Kupplungsteil 2, 3 zusammenwirkt, dass das Halteteil 5 wahlweise in unterschiedlichen relativen Drehpositionen ausrichtbar und jeweils gegen freies, uneingeschränktes Verdrehen um die Steckachse X-X relativ zu dem Kupplungsteil 2, 3 fixiert ist. Dargestellt sind dabei die entsprechenden Verhältnisse am Steckerteil 3, welches daher im Weiteren ausschließlich, jedoch als exemplarisch für beide Kupplungsteile 2, 3 beschrieben wird. Durch diese Ausbildung kann vorteilhafterweise bei oder vor dem Steckvorgang des Steckerteils 3 das auf diesem vormontiert sitzende Halteteil 5 in Drehrichtung (Doppelpfeil T in Fig. 11) so ausgerichtet werden, dass es im Montagebereich beim Stecken frei und ohne Kollisionen platzierbar ist. Das Halteteil 5 kann sich dann auch im weiteren Betrieb nicht mehr frei, sondern allenfalls nur noch über einen eingeschränkten Drehwinkelbereich hinweg verdrehen, so dass auch dann Kollisionen mit umliegenden Bauteilen vermieden werden.

Grundsätzlich kann es sich um eine in Drehrichtung T formschlüssige Fixierung des Halteteiles 5 relativ zu dem Kupplungsteil 3 handeln. In der dargestellten, bevorzugten Ausführung wird allerdings das Halteteil 5 über die Fixiermittel 6 derart in Drehrichtung T kraftformschlüssig fixiert, dass es relativ zu dem Kupplungsteil 3 mit stufiger Verrastung verdrehbar und in die unterschiedlichen Drehpositionen ausrichtbar ist.

Dazu sind die Fixiermittel 6 einerseits von einer umfänglichen Rastkontur 61 des Kupplungsteils 3 und andererseits von mindestens einem mit der nach Art einer Nockenbahn mit einem von der Kreisform abweichenden Umfangsverlauf ausgebildeten Rastkontur 61 zusammenwirkenden Rastnocken 62 des Halteteiles 5 gebildet. Wie sich aus dem Ausführungsbeispiel gemäß Fig. 11 und 12 ergibt, können die Fixiermittel 6 bzw. die Rastkontur 61 im Zusammenwirken mit dem/jedem Rastnocken 62 für eine stufige Verrastung in mindestens sechs unterschiedlichen Drehstellungen, insbesondere mit gleichmäßiger Drehwinkel-Unterteilung, ausgelegt sein. Bei der dargestellten Ausführung wirkt die beispielhaft sternartig mit acht Raststufen ausgebildete Rastkontur 61 mit mindestens zwei Rastnocken 62 des Halteteiles 5 zusammen, wobei die Rastnocken 62 gegenüber der Rastkontur 61 derart asymmetrisch versetzt angeordnet sind, dass sie jeweils einzeln in unterschiedlichen Drehpositionen des Halteteiles 5 mit jeweils einer Raststufe der Rastkontur 61 zusammenwirken. Durch diese Ausgestaltung kann eine Vervielfachung - hier eine Verdoppelung - der Anzahl der möglichen Rast-Drehstellungen im Vergleich zu der Anzahl der Raststufen der Rastkontur 61 erreicht werden.

Zu bemerken ist noch, dass der hier verwendete Begriff "Raststellung" des Halteteiles 5 nicht unbedingt als nur eine genau definierte Winkelstellung, sondern gegebenenfalls als ein eingeschränkter Drehbewegungsbereich zu verstehen ist. Somit kann sich das Halteteil 5 auf dem Kupplungsteil 3 gegebenenfalls über einen zwischen zwei Raststellungen definierten und dadurch begrenzten Drehwinkelbereich von beispielsweise jeweils bis zu 45° oder z. B. 22,5° verdrehen.

Bei der in Fig. 11 und 12 dargestellten Ausführungsform der erfindungsgemäßen Steckverbindung 1 ist - entsprechend der Schnittebene III-III in Fig. 2 - die Rastkontur 61 innerhalb der Ringnut 33 zwischen dem Haltesteg 31 und dem Fixierringsteg 34 gebildet, und zwar durch eine entsprechende Profilierung im Nutgrundbereich der Ringnut 33. Daher ist der/jeder Rastnocken 62 im Innenbereich des jeweiligen oberen Bundes 51 des Halteteiles 5 in einer radial nach innen vorspringenden Anordnung vorgesehen.

In Ausführungsvarianten, die in den Zeichnungen nicht dargestellt sind, kann die Rastkontur 61 auch am Außenumfang des Haltesteges 31 oder im Bereich der Umfangsnut 23 des Muffenteils 2 vorgesehen sein, wobei dann das Halteteil 5 in einem inneren Umfang bzw. am unteren Bund 52 den oder die Rastnocken 62 aufweist.

Mit der in Fig. 13 bis 15 dargestellten dritten Ausführung des Halteteiles 5 kann eine noch bessere Stabilisierung des Halteteils 5 in einer erfindungsgemäßen Steckverbindung 1 erzielt werden. Insbesondere kann damit bei einer federelastischen Aufweitung im Vormontagezustand oder im Montagezustand unterbunden werden, dass bei einem möglichenfalls schräg zur Achse X-X verlaufendem Kraftangriff (in Abweichung von der figürlich dargestellten Richtung des Pfeiles p) ein Überdrehen des Halteteiles 5 erfolgen könnte, so dass dieses nicht mehr radial fixiert wäre.

Diese verbesserte Stabilisierung wird dadurch erreicht, dass anstelle der bei der zweiten Ausführung des Halteteils 5 vorgesehenen, fest positionierten Rastnocken 62 als Fixiermittel 6 des Halteteils 5 jeweils Rastnasen 63 vorgesehen sind, welche sich jeweils am freien Ende eines elastisch federnden Rastarms 64 befinden. Die Rastarme 64 mit den Rastnasen 63 befinden sich jeweils auf den dem Betätigungsbereich 57 zugewandten Seiten des oberen Bundes 51 und sind ein Teil des Bundes 51. Wie Fig. 13 bis 15 zeigen, sind sie vom Betätigungsbereich 57, der sich auf einem radial weiter außen liegenden Durchmesser befindet, durch einen umfangsgemäß verlaufenden Zwischenraum 65 getrennt. Das innere geschlossene Ende des Zwischenraums 65 markiert dabei in dieser Ausführung das Ende des Betätigungsbereichs 57. Wenngleich die entsprechenden Winkel in der Zeichnung aus Gründen der Übersichtlichkeit nicht eingetragen sind, wird auch bei dieser Ausführung durch die Rastarme 64 das Steckerteil 3 über einen größeren Zentriwinkel µ1 umfasst, als es ein Zentriwinkel µ2 ist, um den der untere Bund 52 das Muffenteil 2 umfasst.

Aufgrund einer die Federwirkung des Rastarms 64 kennzeichnenden, radial nach innen gerichteten mechanischen Spannung des Rastarms 64 liegt die jeweilige Rastnase 63 in jeder relativen Drehstellung von Halteteil 5 und Steckerteil 3 zueinander an der Rastkontur 61 des Steckerteils 3 an, wie dies durch Fig. 14 und 15 veranschaulicht wird. Die Krümmung des oberen Bundes 51 kann dazu bevorzugt ausgehend von einer durchgehend gleichartigen umfangsgemäßen, insbesondere kreisbogenförmigen Krümmung in einem Bereich des oberen Bundes 51, der dem Betätigungsabschnitt 57 abgewandt ist, im Bereich der Rastarme 64 in eine stärkere Krümmung übergehen. Die Rastnasen 63 können dabei aufgrund ihrer V-förmig ausgebildeten Spitzen beidseitig eine umfangsgemäß wirkende kraftformschlüssige Rastung mit der Rastkontur 61 des Steckerteiles 3 bewirken.

Bei der dritten Ausführung ist die Rastkontur 61 des Steckerteiles 3 - wie auch bei der zweiten Ausführung - exemplarisch als achtzackiger Stern ausgebildet. Die Rastnase 63 ist dabei im Innenbereich des jeweiligen oberen Bundes 51 des Halteteiles 5 in einer radial nach innen vorspringenden Anordnung vorgesehen, wie dies vorstehend auch als Möglichkeit für den Rastnocken 62 erwähnt wurde. Über die Fixiermittel 6 - die Rastnasen 63 an den Rastarmen 64 des Halteteils 5 einerseits und der Rastkontur 61 des Steckerteils 3 andererseits - wird das Halteteil 5 auch hier derart in Drehrichtung T kraftformschlüssig fixiert, dass es relativ zu dem Kupplungsteil 3 mit stufiger Verrastung um die Steckachse X-X verdrehbar und in die unterschiedlichen Drehpositionen (Fig. 14 und 15) ausrichtbar ist. Auch hierzu ist zu bemerken, dass diese auch als "Raststellungen" bezeichneten Positionen des Halteteiles 5 nicht unbedingt als nur eine jeweils genau definierte Winkelstellung, sondern als ein eingeschränkter Drehbewegungsbereich zu verstehen sind.

Dabei bleibt gewährleistet, dass bei der durch Aufspreizen des Halteteils 5 unter radialer Aufweitung der Halteabschnitte 53 herbeigeführten Demontage der gegenseitige Abstand zwischen den bezüglich der Längsachse Y1-Y1 des Halteteils 5 einander gegenüber liegenden oberen Bünden 51 immer nur so weit vergrößert wird, dass er noch kleiner ist als der Durchmesser D31 des Haltesteges 31 des Steckerteiles 3, während durch die unteren Bünde 52 das Muffenteil 2 freigegeben wird. Das Halteteil 5 kann sich während der Demontage dabei auch nicht in der axialen Richtung X-X der Steckverbindung 1 verschieben.

Es wäre auch möglich, in Abweichung von den dargestellten und beschriebenen Ausführungen, bei denen das Halteteil 5 am Steckerteil 3 vormontiert ist und folglich den Steckerschaft 30 koaxial umschließt, selbstverständlich auch eine entsprechende Vormontage des Halteteiles 5 am Muffenteil 2 vorzusehen. Einer vormontierten Baueinheit aus einem Halteteil 5 und aus einem Kupplungsteil 2, 3, wie es für die erfindungsgemäße Steckverbindung 1 beschrieben ist, wäre somit auch möglich.

An dieser Stelle sei auch bemerkt, dass es in kinematischer Umkehr auch möglich ist, die eine der Spreizfläche 54 entsprechende Schrägfläche am Haltesteg 22 des Muffenteils 2 auszuführen, um beim Aufspreizen des Halteteils 5 die beschriebene Steckkraft-Optimierung zu erzielen.

Ein besonderer Vorteil der Erfindung besteht - wie bereits erwähnt - darin, dass die radiale Baugröße des erfindungsgemäßen Halteteiles 5 optimal klein ausgeführt werden kann. So kann bei einer Außenkontur K1, die durch eine Kreisform mit dem Durchmesser von 28 mm gekennzeichnet ist, die Druckfläche 58 auf einem Umkreis K2 mit einem Durchmesser von 32 mm liegen, wobei der Betätigungsweg zur Demontage nur etwa 2 mm beträgt. Allgemein ausgedrückt bedeutet dies, dass bei einem Halteteil 5 die Differenz der Konturen K2 und K1 - bezogen auf den Wert von K1 - kleiner als 15 Prozent sein und konkret etwa bei nur etwa 12 Prozent liegen kann. Der Betätigungsweg a kann dabei - bezogen auf die Kontur K1 - kleiner sein als 10 Prozent und insbesondere bei etwa 5 Prozent liegen. Des Weiteren können die Kupplungsteile 2, 3 auf ihren der Steckverbindungsseite gegenüberliegenden Seiten grundsätzlich beliebige Anschlusselemente aufweisen. In der dargestellten Ausführung weist das Steckerteil 3 einen Anschlussdorn 35 für eine Fluid-Leitung (Rohr oder Schlauch) auf. Das Muffenteil 2 besitzt keine spezifische Ausbildung, kann aber beispielsweise einen Einschraubstutzen aufweisen, wobei aber auch mindestens eines der Kupplungsteile 2, 3, wie bevorzugt das Muffenteil 2, auch direkt (einstückig) an bestimmten Aggregaten ausgebildet sein kann.

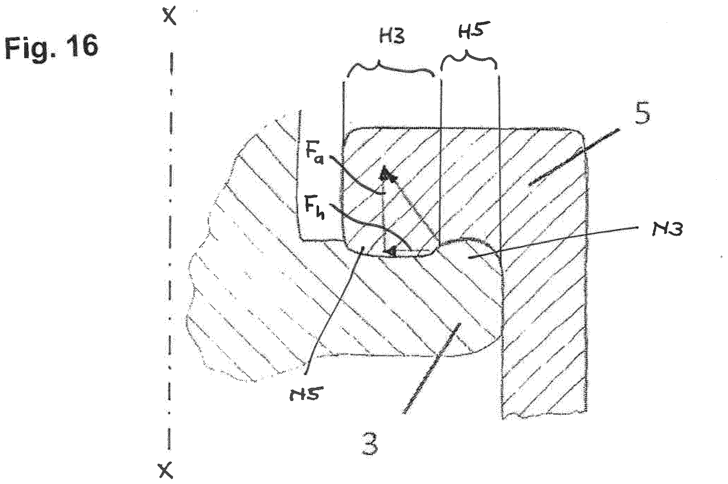

Wie die in Fig.16 dargestellte erfindungsgemäße Ausführung eines Details von Steckerteil 3 und Halteteil 4 in einer erfindungsgemäßen Steckverbindung 1 zeigt, kann in vorteilhafter Ausbildung vorgesehen sein, dass das Steckerteil 3 und das Halteteil 4 jeweils mindestens einen Hinterschnitt H3, H5, vorteilhafterweise - in Achsrichtung X-X gesehen - mehrere Hinterschnitte H3, H5, zur Selbstverriegelung des Halteteils 4 aufweisen. Unter Kraftbeaufschlagung greifen dabei Arme des Halteteils 4 in das Kupplungsteil 3, wobei die Schrägen der Hinterschnitte H3, H5 aufeinander liegen. Wird nun durch den Mediendruck eine vertikale Axialkraft Fa erzeugt, so entsteht in diesem Anlagebereich über die Schräge eine horizontale Kraftkomponente Fh, die entgegen einer Öffnungsbewegung des Halteteils 5 wirkt. Diese Hinterschnitte H3, H5 können insbesondere in einem Bereich in der Nähe des Schlitzes 50 vorgesehen sein.

Es sind also mit diesen Hinterschnitten H3, H5 vorhandene zusätzliche Sicherungsmittel gegen ein ungewolltes Lösen bzw. Öffnen der Verbindung zwischen dem Halteteil 5 und dem Steckerteil 3 vorgesehen, die im Betriebszustand wirksam werden, wenn das System mit einem inneren Systemdruck beaufschlagt ist. Die Hinterschnitte H5 des Halteteils 5 können in der erfindungsgemäßen Steckverbindung 1 vorzugsweise an mindestens zwei Nocken N5 ausgebildet sein, die sich, insbesondere in symmetrischer Anordnung, beidseitig des Bereiches des Schlitzes 50 befinden. Das Halteteil 5 hintergreift dabei den Haltesteg 31 des Steckerteils 3, der an dieser Stelle ebenfalls eine Ausbildung als Nocken N3 aufweisen kann, radial und axial kraftformschlüssig derart, dass ein radiales Aufspreizen des Halteteiles 5 verhindert wird.

### Bezugszeichenliste

- 1: Steckverbindung

- 2: Kupplungsteil (Muffenteil)
- 20: Aufnahmeöffnung von 2 für 3
- 21: Haltesteg von 2
- 22: Gegen-Spreizfläche an 2 für 54
- 23: Umfangsnut in 2

- 3: Kupplungsteil (Steckerteil)
- 30: Steckerschaft von 3
- 31: Haltesteg von 3
- 32: Ringnut an 30
- 33: Umfangsnut an 3 zwischen 31 und 34 zur Aufnahme von 51
- 33a: Stufung in 33
- 34: Fixierringsteg an 3
- 35: Anschlussdorn

- 4: Verriegelungseinrichtung aus 21, 31 und 5

- 5: Halteteil
- 50: Schlitz in 5
- 51: erster (oberer) Bund von 5
- 52: zweiter (unterer) Bund von 5
- 53: Halteabschnitt mit 51 und 52
- 54: Schrägfläche an 52
- 55: Haltekante von 52 für 21
- 57: Betätigungsbereich von 5
- 58: Druckfläche von 57
- 59: innerer Wandbereich von 5 im Bereich von 57 (gegenüber 58)
- 59a: Randabschnitt von 59 mit K
- 59b: Führungs- und Stabilisierungsnocken an 5 (59)

- 6: Fixiermittel (61, 62, 63)
- 61: Rastkontur an 3 (33)
- 62: Rastnocken an 5 (51)
- 63: Rastnase auf 64 an 5 (51)
- 64: Rastarm an 5 (51)
- 65: Zwischenraum zwischen 64 und 57

- a: Betätigungsweg von 58
- B1: Breite von 51
- B2: Breite von 52
- d51: Dicke von 51
- d59: Dicke von 59b
- Fa: Axialkraft (Fig. 16)
- Fh: Horizontalkraft (Fig. 16)
- H3: Hinterschnitt an 3 (Fig. 16)
- H5: Hinterschnitt an 5 (Fig. 16)
- K: Berührungslinie 57/31 zur Kraftumlenkung
- K1: Außenkontur von 5 im Bereich von 53
- K2: Umkreis um durch 58
- O: Spreizbewegung von 53 (Pfeil in Fig. 4)
- p: Betätigungsdruck auf 58 zur Demontage (Pfeil)
- S: Steckrichtung von 3 in 2 zur Montage (Pfeil)
- T: Drehrichtung von 5 relativ zu 2 (Doppelpfeil)
- X-X: Achse von 1, 2, 3, 5
- Y1-Y1: Längsachse von 5
- Y2-Y2: Querachse von 5

- α: Winkelversatz von K zu Y1-Y1
- ß: Schlitzöffungswinkel von 50
- γ: Endwinkel der Demontage in 57
- µ1: Winkelbereich von 51 (Zentriwinkel)
- µ2: Winkelbereich von 52 (Zentriwinkel)
- σ1: Winkel zwischen Ende von 51 und Y2-Y2 (Fig. 3)
- σ2: Winkel zwischen Ende von 52 und Y2-Y2 (Fig. 5)

## Patentansprüche

1. Steckverbindung (1) für Fluid-Leitungen, umfassend zwei zusammensteckbare Kupplungsteile (2, 3), die im eingesteckten Zustand über eine der Steckverbindung (1) zugehörige Verriegelungseinrichtung (4) lösbar arretierbar ist, die einerseits aus zwei äußeren, radial abstehenden und im eingesteckten Zustand axial (X-X), in Steckrichtung (S) benachbarten Haltestegen (21, 31) der beiden Kupplungsteile (2, 3) und andererseits aus einem Halteteil (5) besteht, welches in einem Vormontagezustand an einem der beiden Kupplungsteile (3) axial und radial fixiert montierbar ist und im Montagezustand mit mindestens einem im Axialschnitt insbesondere C-förmigen, zwei Bünde (51, 52) aufweisenden, radial elastisch beweglichen Halteabschnitt (53) die Haltestege (21, 31) der beiden Kupplungsteile (2, 3) axial und radial umgreift, wobei die Bünde (51, 52) des Halteteiles (5) derart mit unterschiedlicher Größe und/oder Form ausgebildet sind, dass bei einer radial elastischen Bewegung des Halteabschnittes (53) aus dem Montagezustand heraus nach außen ein erster Bund (52), der im Montagezustand am Haltesteg (21) des einen Kupplungsteiles (2) anliegt, diesen Haltesteg (21) des Kupplungsteiles (2) freigibt, während der andere, zweite Bund (51), zumindest bereichsweise, den Haltesteg (31) des anderen Kupplungsteiles (3), an dem er anliegt, hintergreift, wobei die Bünde (51, 52) sich in Größe und/oder Form dadurch unterscheiden, dass der eine Bund (51) im Montagezustand eines der Kupplungsteile (2, 3) über einen größeren Zentriwinkel (µ1) umfasst, als es ein Zentriwinkel (µ2) ist, um den der andere Bund (52) das andere Kupplungsteil (3, 2) umfasst,
**dadurch gekennzeichnet, dass** das Halteteil (5) als einteiliger elastischer Ring mit einer durch einen Schlitz (50) unterbrochenen Umfangskontur ausgebildet ist, welcher Ring in radialsymmetrischer Umfangsverteilung zwei im Axialschnitt C-förmige Halteabschnitte (53) aufweist, die sich in Längsseiten befinden, wobei das Halteteil (5), in Form mindestens eines Hinterschnitts (H5), der sich an einem Nocken (N5) des Halteteils (5) in der Nähe des Schlitzes (50) befindet, zusätzliche Sicherungsmittel (H5, N5) umfasst, die unter Systemdruck ein radiales Aufspreizen des Halteteiles (5) verhindern.

2. Steckverbindung (1) nach Anspruch 1,
**dadurch gekennzeichnet, dass** ein Schlitzöffnungswinkel (ß) zwischen beidseitig des Schlitzes (50) liegenden Enden des Halteteiles (5) kleiner ist als 15°, vorzugsweise kleiner als 5°.

3. Steckverbindung (1) nach Anspruch 1 oder 2,
**dadurch gekennzeichnet, dass** ein Bund (52) des Halteteiles (5) im Bereich des Halteabschnittes (53) als Rastelement ausgebildet ist, welches auf der beim Steckvorgang dem Kupplungsteil (2) zugewandten Seite eine als Spreizfläche ausgebildete radiale innere Schrägfläche (54) aufweist, die durch den sich beim Stecken relativ bewegenden Haltesteg (21) des Kupplungsteiles (2) eine radial nach außen gerichtete Spreizbewegung des Halteteiles (5) bewirkt, wobei der Bund (52) nach einem Verrasten mit dem Kupplungsteil (2) mit einer radialen Haltekante (55) den Haltesteg (21) rastend formschlüssig hintergreift.

4. Steckverbindung (1) nach Anspruch 3,
**dadurch gekennzeichnet, dass** die Spreizfläche (54), indem sie relativ zu einer Gegen-Spreizfläche (22) des Haltesteges (21) gleitet, unter der Wirkung einer Montagekraft beim Einstecken um einen Montageweg, eine Spreizbewegung des Halteteiles (5) quer zur Achse (X-X) um einen Spreizweg bewirkt, wobei eine der Gegen-Spreizfläche (22) zugewandte Kontur der Spreizfläche (54) derart auf eine der Spreizfläche (54) zugewandte Gegen-Kontur der Gegen-Spreizfläche (22) abgestimmt ist, dass sich der Spreizweg beim Einstecken in Abhängigkeit vom Montageweg nichtlinear ändert.

5. Steckverbindung (1) nach einem der Ansprüche 1 bis 4,
**dadurch gekennzeichnet, dass** die Bünde (51, 52) des Halteabschnittes (53) im Montagezustand einen/den Schaft (30) des Steckerteiles (3), vorzugsweise im Bereich einer Umfangsnut (33) des Steckerteiles (3), und das Muffenteil (2), vorzugsweise im Bereich einer Umfangsnut (23) des Muffenteils (2), formschlüssig umgreifen.

6. Steckverbindung (1) nach einem der Ansprüche 1 bis 5,
**dadurch gekennzeichnet, dass** der Zentriwinkel (µ1), der zwischen Anfang und Ende des fixierend wirkenden Bereichs des ersten Bundes (51) aufgespannt ist, im Bereich von 115° bis 135° liegt.

7. Steckverbindung (1) nach einem der Ansprüche 1 bis 6,
**dadurch gekennzeichnet, dass** der Zentriwinkel (µ2), der zwischen Anfang und Ende des fixierend wirkenden Bereichs des zweiten Bundes (52) aufgespannt ist, im Bereich von 80° bis 110° liegt.

8. Steckverbindung (1) nach einem der Ansprüche 1 bis 7,
**dadurch gekennzeichnet, dass** der erste Bund (51) und der zweite Bund (52) jeweils die gleiche Breite (B1, B2) und eine durchgehend gleichartige umfangsgemäße, insbesondere kreisbogenförmige, Krümmung aufweisen.

9. Steckverbindung (1) nach einem der Ansprüche 1 bis 8,
**dadurch gekennzeichnet, dass** umfangsgemäß zwischen zwei Haltebereichen (53), insbesondere an einer dem Schlitz (50) diametral gegenüberliegenden Querseite des Halteteils (5) ein elastischer Betätigungsbereich (57) ausgebildet sind, in dem durch eine Druckkraft (p) auf eine Druckfläche (58) jeweils in Richtung einer Längsachse (Y1-Y1) des Halteteils (5) bei der Demontage eine durch Aufspreizen (O) erfolgende radiale Aufweitung der Halteabschnitte (53) herbeigeführt werden kann.

10. Steckverbindung (1) nach Anspruch 9,
**dadurch gekennzeichnet, dass** der Betätigungsbereich (57) einen Anschlag bildet, der derart ausgeführt ist, dass er, wenn er nach Zurücklegung eines Betätigungsweges (a) zur Anlage an einem der Kupplungsteile (2, 3), insbesondere am Schaft (30) des Steckerteils (3), besonders bevorzugt an einem Haltesteg (31) des Schaftes (30) kommt, die Spreizbewegung des Halteteils (5), also die radial elastische Bewegung jedes Halteabschnittes (53) nach außen, begrenzt.

11. Steckverbindung (1) nach einem der Ansprüche 1 bis 10,
**dadurch gekennzeichnet, dass** in einem der beiden Kupplungsteile (2, 3), bevorzugt im Schaft (30) des Steckerteiles (3) axial zwischen dem Haltesteg (31) und einem zusätzlichen Fixierringsteg (34) eine umfangsgemäße Ringnut (33) gebildet ist, in der insbesondere bei der Demontage der erste Bund (51) des Haltelementes (5) gehalten wird.

12. Steckverbindung (1) nach einem der Ansprüche 9 bis 11,
**dadurch gekennzeichnet, dass** zur Umsetzung des auf die Druckfläche (58) ausgeübten Drucks (p) in eine Aufspreizbewegung der Halteabschnitte (53) an einer in einem Randabschnitt (59a) eines inneren Wandbereiches (59) des Betätigungsbereiches (57) liegenden Berührungslinie (K) eine Kraftumlenkung erfolgt, wobei die Berührungslinie (K) bei der Aufspreizbewegung der Halteabschnitte (53) eine Schwenkachse darstellt.

13. Steckverbindung (1) nach Anspruch 12,
**dadurch gekennzeichnet, dass** eine umfangsgemäße Lage der Berührungslinie (K) durch einen Winkel (α) definiert ist, der zwischen einem zur Berührungslinie (K) führenden Radialstrahl und einer Längsachse (Y1-Y1) des Halteteiles (5) aufgespannt ist und der insbesondere in einem Bereich von 40° und 50°, vorzugsweise bei 45°, liegt.

14. Steckverbindung (1) nach einem der Ansprüche 1 bis 13,
**dadurch gekennzeichnet, dass** das Halteteil (5) in seinem auf einem Kupplungsteil (2, 3) sitzenden Zustand über Fixiermittel (6) derart mit dem Kupplungsteil (2, 3) zusammenwirkt, dass das Halteteil (5) wahlweise in unterschiedlichen relativen Drehpositionen ausrichtbar und jeweils gegen freies, uneingeschränktes Verdrehen um die Steckachse (X-X) relativ zu dem Kupplungsteil (2, 3) fixiert ist.

15. Steckverbindung (1) nach Anspruch 14,
**dadurch gekennzeichnet, dass** das Halteteil (5) über die Fixiermittel (6) derart in Drehrichtung (T) kraftformschlüssig fixiert ist, dass es relativ zu dem Kupplungsteil (2, 3) mit stufiger Verrastung verdrehbar und in die unterschiedlichen Drehpositionen ausrichtbar ist.

16. Steckverbindung (1) nach Anspruch 14 oder 15,
**dadurch gekennzeichnet, dass** die Fixiermittel (6) von einer umfänglichen Rastkontur (61) des Kupplungsteils (2, 3), insbesondere des Steckerteiles (3), und mindestens einem mit der Rastkontur (61) zusammenwirkenden Rastnocken (62) oder einem mit einer Rastnase (63) versehenen elastisch federndem Rastarm (64) des Halteteiles (5) gebildet sind.

17. Steckverbindung (1) nach einem der Ansprüche 1 bis 16,
**dadurch gekennzeichnet, dass** am Halteteil (5), insbesondere in seinem Betätigungsbereich (57), radial nach innen weisende Führungs- und Stabilisierungsnocken (59b) angeordnet sind, die bei der Demontage in einer Umfangsnut (33) zur Aufnahme der ersten Bünde (51) gleiten und eine Verschiebung des Halteteiles (5) in axialer Richtung (X-X) verhindern.

18. Steckverbindung (1) nach einem der Ansprüche 1 bis 17,
**dadurch gekennzeichnet, dass** das Halteteil (5), insbesondere in Form von mindestens zwei symmetrisch zum Schlitz (50) angeordneten Hinterschnitten (H5), zusätzliche Sicherungsmittel (H5, N5) umfasst, die unter Systemdruck ein radiales Aufspreizen des Halteteiles (5) verhindern.

## Claims

1. Plug-in connection (1) for fluid lines, comprising two plug-together coupling parts (2, 3) which, in the plugged-in state, can be arrested in a releasable manner via a locking device (4), which belongs to the plug-in connection (1) and comprises, on the one hand, two outer, radially projecting retaining crosspieces (21, 31) of the two coupling parts (2, 3), said retaining crosspieces, in the plugged-in state, being axially (X-X) adjacent in the plug-in direction (S), and, on the other hand, a retaining part (5) which, in a preassembly state, can be mounted in an axially and radially fixed manner on one of the two coupling parts (3), and, in the assembled state, engages axially and radially around the retaining crosspieces (21, 31) of the two coupling parts (2, 3) by way of at least one radially elastically movable retaining portion (53), which is in particular C-shaped in axial section and has two collars (51, 52), wherein the collars (51, 52) of the retaining part (5) are designed to have different sizes and/or shapes such that, in the case of the retaining portion (53) moving radially elastically outwards out of the assembled state, a first collar (52), which in the assembled state butts against the retaining crosspiece (21) of the one coupling part (2), frees said retaining crosspiece (21) of the coupling part (2), whereas the other, second collar (51) engages, at least in part, behind the retaining crosspiece (31) of the other coupling part (3), against which it butts, wherein the collars (51, 52) differ in size and/or shape in that, in the assembled state, the one collar (51) encompasses one of the coupling parts (2, 3) over a central angle (µ1) which is larger than a central angle (µ2) over which the other collar (52) encompasses the other coupling part (3, 2),
**characterized in that** the retaining part (5) is designed in the form of a single-part elastic ring with a circumferential contour interrupted by a slit (50), which ring has two retaining portions (53) distributed in a radially symmetrical manner around its circumference, said portions being C-shaped in axial section and being located along longitudinal sides, wherein the retating part (5) comprises additional securing means (H5, N5) in the form of at least one undercut (H5) located on a protuberance (N5) of the retaining part (5) in the vicinity of the slit (50), said securing means preventing the retaining part (5) from spreading open radially under system pressure.

2. Plug-in connection (1) according to Claim 1,
**characterized in that** a slit-opening angle (β) between ends of the retaining part (5) located on either side of the slit (50) is smaller than 15°, preferably smaller than 5°.

3. Plug-in connection (1) according to Claim 1 or 2,
**characterized in that**
one collar (52) of the retaining part (5) in the region of the retaining portion (53) is designed in the form of a latching element which, on the side which is directed towards the coupling part (2) during the plug-in operation, has a radially inner sloping surface (54), which is designed in the form of a spreading surface and causes a radially outwardly directed spreading movement of the retaining part (5) as a result of the retaining crosspiece (21) of the coupling part (2) moving relative to it during the plugging-in operation, wherein the collar (52), following latching to the coupling part (2), engages in a form-fitting manner with latching action behind the retaining crosspiece (21) by way of a radial retaining edge (55).

4. Plug-in connection (1) according to Claim 3,
**characterized in that** the spreading surface (54), by sliding relative to a mating spreading surface (22) of the retaining crosspiece (21), gives rise to a spreading movement of the retaining part (5), in a direction transverse to the axis (X-X), by a spreading distance under the action of an assembly force, during the plugging-in operation, by an assembly distance, wherein a contour of the spreading surface (54) which is directed towards the mating spreading surface (22) is coordinated with a mating contour of the mating spreading surface (22), said mating contour being directed towards the spreading surface (54), such that the spreading distance changes non-linearly in dependence on the assembly distance during the plugging-in operation.

5. Plug-in connection (1) according to one of Claims 1 to 4,
**characterized in that**, in the assembled state, the collars (51, 52) of the retaining portion (53) engage in a form-fitting manner around a/the shank (30) of the plug part (3), preferably in the region of a circumferential groove (33) of the plug part (3), and socket part (2), preferably in the region of a circumferential groove (23) of the socket part (2).

6. Plug-in connection (1) according to one of Claims 1 to 5,
**characterized in that** the central angle (p1), which is defined between the start and end of the fixing-action region of the first collar (51), ranges from 115° to 135°.

7. Plug-in connection (1) according to one of Claims 1 to 6,
**characterized in that** the central angle (µ2), which is defined between the start and end of the fixing-action region of the second collar (52), ranges from 80° to 110°.

8. Plug-in connection (1) according to one of Claims 1 to 7,
**characterized in that** the first collar (51) and the second collar (52) have the same width (B1, B2) and the same circumferential curvature, in particular in the form of an arc of a circle, throughout.

9. Plug-in connection (1) according to one of Claims 1 to 8,
**characterized in that** an elastic actuating region (57) is formed on the circumference between two retaining regions (53), in particular on a transverse side of the retaining part (5) which is located diametrically opposite the slit (50), in which actuating region subjecting a pressure-exerting surface (58) to a compressive force (p) in each case in the direction of a longitudinal axis (Y1-Y1) of the retaining part (5) during dismantling can give rise to the retaining portions (53) widening radially as a result of a spreading-open operation (O).

10. Plug-in connection (1) according to Claim 9,
**characterized in that** the actuating region (57) forms a stop which is configured such that when, after covering an actuating distance (a), it ends up in abutment against one of the coupling parts (2, 3), in particular against the shank (30) of the plug part (3), particularly preferably against a retaining crosspiece (31) of the shank (30), it delimits the spreading movement of the retaining part (5), that is to say the radially elastic movement of each retaining portion (53) in the outward direction.

11. Plug-in connection (1) according to one of Claims 1 to 10,
**characterized in that** a circumferential annular groove (33) is formed in one of the two coupling parts (2, 3), preferably in the shank (30) of the plug part (3), axially between the retaining crosspiece (31) and an additional annular fixing crosspiece (34), the first collar (51) of the retaining element (5) being retained in said circumferential annular groove in particular during the dismantling operation.

12. Plug-in connection (1) according to one of Claims 9 to 11,
**characterized in that**, for the conversion of the pressure (p) to which the pressure-exerting surface (58) is subjected into a spreading-open movement of the retaining portions (53), force deflection takes place at a line of contact (K) located in a peripheral portion (59a) of an inner wall region (59) of the actuating region (57), wherein the line of contact (K) constitutes a pivot axis for the spreading-open movement of the retaining portions (53).

13. Plug-in connection (1) according to Claim 12,
**characterized in that** a circumferential position of the line of contact (K) is defined by an angle (α) which is defined between a radial line leading to the line of contact (K) and a longitudinal axis (Y1-Y1) of the retaining part (5) and which, in particular, ranges from 40° to 50°, and is preferably 45°.

14. Plug-in connection (1) according to one of Claims 1 to 13,
**characterized in that**, in the state in which it is seated on a coupling part (2, 3), the retaining part (5) interacts with the coupling part (2, 3) via fixing means (6) such that the retaining part (5) can be placed optionally in different relative rotary positions and is fixed in each case against free, unrestricted rotation about the plug-in axis (X-X) relative to the coupling part (2, 3).

15. Plug-in connection (1) according to Claim 14,
**characterized in that** the retaining part (5) is fixed in a force-/form-fitting manner in the direction of rotation (T) via the fixing means (6) such that it is possible for it to be rotated with stepped latching capability relative to the coupling part (2, 3) and placed in the different rotary positions.

16. Plug-in connection (1) according to Claim 14 or 15,
**characterized in that** the fixing means (6) are formed by a circumferential latching contour (61) of the coupling part (2, 3), in particular of the plug part (3), and at least one latching protuberance (62) of the retaining part (5), said latching protuberance interacting with the latching contour (61), or one elastically resilient latching arm (64) of the retaining part (5), said latching arm being provided with a latching nose (63).

17. Plug-in connection (1) according to one of Claims 1 to 16,
**characterized in that** the retaining part (5), in particular the actuating region (57) thereof, has arranged on it radially inwardly oriented guiding and stabilizing protuberances (59b) which, during the dismantling operation, slide in a circumferential groove (33) for accommodating the first collars (51) and prevent displacement of the retaining part (5) in the axial direction (X-X).

18. Plug-in connection (1) according to one of Claims 1 to 17,
**characterized in that** the retaining part (5) comprises additional securing means (H5, N5) in particular in the form of at least two undercuts (H5) arranged symmetrically in relation to the slit (50), said securing means preventing the retaining part (5) from spreading open radially under system pressure.

## Revendications

1. Raccord à emboîter (1) pour conduites de fluide, comprenant deux parties d'accouplement (2, 3) emboîtables, qui, dans l'état emboîté, peut être bloqué de manière détachable par le biais d'un dispositif de verrouillage (4) associé au raccord à emboîter (1), qui se compose d'une part de deux nervures de retenue (21, 31) extérieures, faisant saillie radialement, des deux parties d'accouplement (2, 3), qui sont adjacentes axialement (X-X) dans la direction d'emboîtement (S) dans l'état emboîté et d'autre part d'une partie de retenue (5), qui peut être montée de manière fixée axialement et radialement dans un état de prémontage sur l'une des deux parties d'accouplement (3) et qui s'engage axialement et radialement autour des nervures de retenue (21, 31) des deux parties d'accouplement (2, 3) dans l'état de montage, par au moins une portion de retenue (53) déplaçable radialement élastiquement, notamment en forme de C en coupe axiale, présentant deux épaulements (51, 52), les épaulements (51, 52) de la partie de retenue (5) étant réalisés avec une taille et/ou une forme différentes de telle sorte que dans le cas d'un déplacement radialement élastique de la portion de retenue (53) hors de l'état de montage vers l'extérieur, un premier épaulement (52), qui, dans l'état de montage, s'applique contre la nervure de retenue (21) de l'une des parties d'accouplement (2), libère cette nervure de retenue (21) de la partie d'accouplement (2), tandis que l'autre, le deuxième épaulement (51), vient en prise par l'arrière au moins en partie avec la nervure de retenue (31) de l'autre partie d'accouplement (3) contre laquelle il s'applique, les épaulements (51, 52) se distinguant de par leur taille et/ou leur forme par le fait que l'un des épaulements (51), dans l'état de montage, entoure l'une des parties d'accouplement (2, 3) suivant un plus grand angle au centre (µ1) qu'un angle au centre (µ2) suivant lequel l'autre épaulement (52) entoure l'autre partie d'accouplement (3, 2) **caractérisé en ce que** la partie de retenue (5) est réalisée sous forme de bague élastique d'une seule pièce avec un contour périphérique interrompu par une fente (50), laquelle bague présente deux portions de retenue (53) en forme de C en coupe axiale réparties avec une symétrie radiale sur la périphérie, qui se trouvent dans les côtés longitudinaux, la partie de retenue (5), sous forme d'au moins une contre-dépouille (H5), qui se trouve au niveau d'une came (N5) de la partie de retenue (5) à proximité de la fente (50), comprenant des moyens de fixation supplémentaires (H5, N5) qui empêchent un écartement radial de la partie de retenue (5) sous l'effet de la pression du système.

2. Raccord à emboîter (1) selon la revendication 1, **caractérisé en ce qu'**un angle d'ouverture de fente (β) entre des extrémités de la partie de retenue (5) situées des deux côtés de la fente (50) est inférieur à 15°, de préférence inférieur à 5°.

3. Raccord à emboîter (1) selon la revendication 1 ou 2,
**caractérisé en ce qu'**un épaulement (52) de la partie de retenue (5) est réalisé dans la région de la portion de retenue (53) en tant qu'élément d'encliquetage qui présente, sur le côté tourné vers la partie d'accouplement (2) lors de l'opération d'emboîtement, une surface oblique interne radiale (54) réalisée sous forme de surface d'écartement qui provoque un déplacement d'écartement orienté radialement vers l'extérieur de la partie de retenue (5) par la nervure de retenue (21) de la partie d'accouplement (2) se déplaçant relativement lors de l'emboîtement, l'épaulement (52), après un encliquetage avec la partie d'accouplement (2) venant en prise par l'arrière par engagement par correspondance de formes par encliquetage par une arête de retenue radiale (55) avec la nervure de retenue (21).

4. Raccord à emboîter (1) selon la revendication 3, **caractérisé en ce que** la surface d'écartement (54), du fait qu'elle glisse par rapport à une surface d'écartement conjuguée (22) de la nervure de retenue (21), sous l'effet d'une force de montage lors de l'emboîtement suivant une course de montage, provoque un déplacement d'écartement de la partie de retenue (5) transversalement à l'axe (X-X) suivant une course d'écartement, un contour de la surface d'écartement (54) tourné vers une surface d'écartement conjuguée (22) étant adapté à un contour conjugué de la surface d'écartement conjuguée (22) tourné vers la surface d'écartement (54) de telle sorte que la course d'écartement ne varie pas de manière linéaire en fonction de la course de montage lors de l'emboîtement.

5. Raccord à emboîter (1) selon l'une quelconque des revendications 1 à 4,
**caractérisé en ce que** les épaulements (51, 52) de la portion de retenue (53), dans l'état de montage, viennent en prise par engagement par correspondance de formes autour d'une / de la tige (30) de la partie d'emboîtement (3), de préférence dans la région d'une rainure périphérique (33) de la partie d'emboîtement (3), et autour de la partie de manchon (2), de préférence dans la région d'une rainure périphérique (23) de la partie de manchon (2).

6. Raccord à emboîter (1) selon l'une quelconque des revendications 1 à 5, **caractérisé en ce que** l'angle au centre (µ1) qui est tendu entre le début et la fin de la plage d'action de fixation du premier épaulement (51), se situe dans une plage de 115° à 135°.

7. Raccord à emboîter (1) selon l'une quelconque des revendications 1 à 6,
**caractérisé en ce que** l'angle au centre (µ2), qui est tendu entre le début et la fin de la plage d'action de fixation du deuxième épaulement (52), se situe dans une plage de 80° à 110°.

8. Raccord à emboîter (1) selon l'une quelconque des revendications 1 à 7,
**caractérisé en ce que** le premier épaulement (51) et le deuxième épaulement (52) présentent à chaque fois la même largeur (B1, B2) et une courbure continue identique sur la périphérie, en particulier en forme d'arc de cercle.

9. Raccord à emboîter (1) selon l'une quelconque des revendications 1 à 8,
**caractérisé en ce qu'**une région d'actionnement élastique (57) est réalisée sur la périphérie entre deux régions de retenue (53) notamment au niveau d'un côté transversal de la partie de retenue (5) diamétralement opposé à la fente (50), dans laquelle région un écartement radial des portions de retenue (53) se produisant par écartement (O) peut être provoqué lors du démontage dans la direction d'un axe longitudinal (Y1-Y1) de la partie de retenue (5) par une force de pression (p) sur une surface de pression (58).

10. Raccord à emboîter (1) selon la revendication 9, **caractérisé en ce que** la région d'actionnement (57) forme une butée qui est réalisée de telle sorte que lorsqu'elle vient en appui contre l'une des parties d'accouplement (2, 3), notamment contre la tige (30) de la partie d'emboîtement (3), particulièrement préférablement contre une nervure de retenue (31) de la tige (30), après avoir parcouru une course d'actionnement (a), elle limite le mouvement d'écartement de la partie de retenue (5), c'est-à-dire le déplacement radialement élastique de chaque portion de retenue (53) vers l'extérieur.

11. Raccord à emboîter (1) selon l'une quelconque des revendications 1 à 10, **caractérisé en ce que** dans l'une des deux parties d'accouplement (2, 3), de préférence dans la tige (30) de la partie d'emboîtement (3), est formée axialement entre la nervure de retenue (31) et une nervure de bague de fixation supplémentaire (34), une rainure annulaire périphérique (33) dans laquelle est notamment retenu lors du démontage le premier épaulement (51) de l'élément de retenue (5).

12. Raccord à emboîter (1) selon l'une quelconque des revendications 9 à 11,
**caractérisé en ce que** pour la conversion de la pression (p) exercée sur la surface de pression (58) en un mouvement d'écartement des portions de retenue (53), au niveau d'une ligne de contact (K) située dans une portion de bord (59a) d'une région de paroi interne (59) de la région d'actionnement (57), une déviation de force se produit, la ligne de contact (K) constituant un axe de pivotement lors du mouvement d'écartement des portions de retenue (53).

13. Raccord à emboîter (1) selon la revendication 12, **caractérisé en ce qu'**une position périphérique de la ligne de contact (K) est définie par un angle (α) qui est tendu entre un rayon radial conduisant à la ligne de contact (K) et un axe longitudinal (Y1-Y1) de la partie de retenue (5) et qui est situé notamment dans une plage de 40° à 50°, de préférence vaut 45°.

14. Raccord à emboîter (1) selon l'une quelconque des revendications 1 à 13,
**caractérisé en ce que** la partie de retenue (5), dans son état reposant sur une partie d'accouplement (2, 3), coopère par le biais de moyens de fixation (6) avec la partie d'accouplement (2, 3) de telle sorte que la partie de retenue (5) puisse être orientée de manière sélective dans différentes positions de rotation relatives et soit à chaque fois fixée contre une rotation libre non limitée autour de l'axe d'emboîtement (X-X) par rapport à la partie d'accouplement (2, 3).

15. Raccord à emboîter (1) selon la revendication 14, **caractérisé en ce que** la partie de retenue (5) est fixée par engagement par correspondance de formes et par force par le biais des moyens de fixation (6) dans la direction de rotation (T) de telle sorte qu'elle puisse tourner par rapport à la partie d'accouplement (2, 3) avec un encliquetage cranté et qu'elle puisse être orientée dans les différentes positions de rotation.

16. Raccord à emboîter (1) selon la revendication 14 ou 15, **caractérisé en ce que** les moyens de fixation (6) sont formés par un contour d'encliquetage périphérique (61) de la partie d'accouplement (2, 3), en particulier de la partie d'emboîtement (3), et par au moins une came d'encliquetage (62) coopérant avec un contour d'encliquetage (61) ou par un bras d'encliquetage (64) élastique à ressort de la partie de retenue (5) pourvu d'un ergot d'encliquetage (63).

17. Raccord à emboîter (1) selon l'une quelconque des revendications 1 à 16, **caractérisé en ce que** des cames de guidage et de stabilisation (59b) tournées radialement vers l'intérieur sont disposées sur la partie de retenue (5), en particulier dans sa région d'actionnement (57), lesquelles, lors du démontage, glissent dans une rainure périphérique (33) pour recevoir les premiers épaulements (51) et empêchent un déplacement de la partie de retenue (5) dans la direction axiale (X-X).

18. Raccord à emboîter (1) selon l'une quelconque des revendications 1 à 17,
**caractérisé en ce que** la partie de retenue (5), en particulier sous la forme d'au moins deux contre-dépouilles (H5) disposées symétriquement par rapport à la fente (50), comprend des moyens de fixation supplémentaires (H5, N5) qui empêchent un écartement radial de la partie de retenue (5) sous l'effet de la pression du système.
